# EUROPEAN PATENT SPECIFICATION

(11) **EP 2 706 259 B1**
(45) Date of publication and mention of the grant of the patent: **05.06.2019**
(21) Application number: 13181166.3
(22) Date of filing: 21.08.2013
(51) Int. Cl.: F16F 15/134, F16F 15/123, F16F 15/14, F16F 15/16

(54) **Torque fluctuation reducing apparatus**
Vorrichtung zum Reduzieren der Drehmomentschwankung
Appareil de réduction de fluctuation de couple

(30) Priority: 07.09.2012 JP 2012196816
(43) Date of publication of application: 12.03.2014
(73) Proprietor: AISIN SEIKI KABUSHIKI KAISHA, Kariya-shi, Aichi 448-8650 (JP)
(72) Inventor: Saeki, Tomohiro, Kariya-shi, Aichi 448-8650 (JP); Kawazoe, Hiroshi, Kariya-shi, Aichi 448-8650 (JP); Nishio, Yusaku, Kariya-shi, Aichi 448-8650 (JP); Ebata, Masaru, Kariya-shi, Aichi 448-8650 (JP); Hori, Takashi, Anjo-shi, Aichi 444-1192 (JP); Takikawa, Yoshihiro, Anjo-shi, Aichi 444-1192 (JP)
(74) Representative: Kramer Barske Schmidtchen Patentanwälte PartG mbB

(56) References cited:
- DE-A1- 3 618 770
- DE-A1-102011 085 402
- US-A- 5 295 910
- US-A1- 2009 125 202

## Description

### TECHNICAL FIELD

This disclosure generally relates to a torque fluctuation reducing apparatus.

### BACKGROUND DISCUSSION

A torque fluctuation reducing apparatus is provided on a power transmission path between an engine serving as a drive source and a transmission, and reduces (absorbs, restricts) fluctuation torque generated between the engine and the transmission. The torque fluctuation reducing apparatus may include a damper mechanism which absorbs the fluctuation torque by means of an elastic force (a spring force). The damper mechanism includes a configuration where an elastic member (a coil spring) is arranged between two rotating members in a circumferential direction thereof so that the coil spring is compressed when the two rotating members rotate relative to each other, and thus the fluctuation torque is reduced.

A known torque fluctuation reducing apparatus may be provided with two kinds of damper mechanisms (a coil spring, an elastic member) which are arranged in series with each other so that the fluctuation torque is restricted in response to a driving status of an engine (for example, at start-up, at idling, and so forth) (for example, refer to JP2010-38312A which is hereinafter referred to as Patent reference 1).

In addition, in order to achieve an enhanced vibration damping performance during driving at low speeds, the known torque fluctuation reducing apparatus may be provided with a dynamic damper where an inertia body (an inertia member) is elastically connected via an elastic body (an elastic member) to the damper mechanism which is provided at a lock-up apparatus at a torque converter between the engine and the transmission (for example, refer to JP2009-293671A and JP2012-77811A which are hereinafter referred to as Patent references 2 and 3, respectively).

According to the known torque fluctuation reducing apparatus of Patent reference 1, simply arranging the two kinds of damper mechanisms in series with each other provides a limited absorption of the fluctuation torque. Accordingly, there is a need for further reducing vibrations of a vehicle and noises of the vehicle.

According to the known torque fluctuation reducing apparatuses of Patent references 2 and 3, a seat is not applied to an end portion of the elastic body (the elastic member) of the dynamic damper, which causes no problem in a case where the dynamic damper is used in oil circulating inside the torque converter. However, in a case where the known torque fluctuation reducing apparatus is applied to a case where the dynamic damper is used in a viscous medium which does not circulate, wear may progress at the elastic body (the elastic member) or at the rotating members. In addition, according to the known torque fluctuation reducing apparatuses of Patent references 2 and 3, the inertia body of the dynamic damper is in a state where the inertia body is always hard to move because the inertia body of the dynamic damper is in a chamber which is filled with oil in the torque converter. Accordingly, an aimed vibration damping performance may not be obtained.

Furthermore, from US 2009/0125202 A1 a torque converter with a turbine mass absorber, from DE 10 2011 085 402 A1 a hydrodynamic torque converter, from US 5,292,910 A an apparatus for dampening vibrations, and from DE 36 18 770 A1 a torsional vibration damper with a spring holder is known.

A need thus exists for a torque fluctuation reducing apparatus which allows an aimed vibration damping performance to be obtained even in a case where a dynamic damper is used in a viscous medium which does not circulate.

### SUMMARY

According to an aspect of this disclosure, a torque fluctuation reducing apparatus according to claim 1 is provided.

According to the configuration according to claim 1, damping effects are increased by providing the dynamic damper on the power transmission path between the first main damper and the second main damper. In addition, according to the above-described configuration, wear of each of the dampers is restricted by enclosing the viscous medium in the chamber. In addition, according to the above-described configuration, an amount that the inertia body of the dynamic damper and the viscous medium are in contact with each other is controlled by enclosing the viscous medium in the part of the chamber, and therefore the most appropriate damping is obtained.

According to another aspect of this disclosure, the first main damper is arranged radially outwardly relative to the second main damper.

According to the above-described configuration, a space of the apparatus in an axial direction may be reduced.

According to another aspect of this disclosure, the first main damper is set to be immersed in the viscous medium accumulating at a radially outward portion in the chamber when the torque fluctuation reducing apparatus rotates.

According to the above-described configuration, component members of the first main damper are restricted from wearing.

According to another aspect of this disclosure, the first main damper includes an arc coil spring which is formed in a circular arc-shape and which reduces the fluctuation torque generated between the drive source and the transmission.

According to the above-described configuration, a torsional angle of the first main damper is set to be large, and accordingly a torsional rigidity thereof is reduced, which lowers a resonance rotation speed.

According to another aspect of this disclosure, the torque fluctuation reducing apparatus further includes a cover plate covering the chamber, the cover plate serving as part of a first power transmission member on the power transmission path at a drive source-side relative to the first main damper, and serving as part of a component member of the first main damper.

According to the above-described configuration, the number of parts and components of the torque fluctuation reducing apparatus is reduced.

According to another aspect of this disclosure, the torque fluctuation reducing apparatus further includes a seal member sealing a clearance between a second power transmission member on the power transmission path at the transmission-side relative to the second main damper, and the cover plate, wherein the cover plate is formed in an annular shape and is extended radially inwardly relative to the first main damper and the second main damper, and the dynamic damper.

According to the above-described configuration, a distance is assured from the portion where the first power transmission member is slidably in pressure contact with the seal member to the portion where the viscous medium, which exists at the radially outward portion in the chamber, splashes. Accordingly the viscous medium is restricted from leaking out. In addition, because a sliding radius of the first transmission member and the seal member is small, hysteresis may be set to be small, thereby enhancing performance of the torque fluctuation reducing apparatus.

According to another aspect of this disclosure, the second main damper includes a first coil spring for reducing the fluctuation torque generated between the drive source and the transmission, and a first seat member made of resin and arranged at each end of the first coil spring, and the dynamic damper includes a second coil spring for restricting vibration at a specific resonance point of a rotative power from the drive source, and a second seat member made of resin and arranged at each end of the second coil spring.

According to the above-described configuration, by arranging the first seat member made of the resin, the wear of the first coil spring is reduced. In addition, by arranging the second seat member made of the resin, the wear of the second coil spring is reduced.

According to another aspect of this disclosure, the dynamic damper is provided at plural positions on the power transmission path between the first main damper and the second main damper in a manner that the plural dynamic dampers are parallel to each other on the power transmission path.

According to the above-described configuration, vibrations may be restricted at the resonance points of the plural systems because characteristic properties of the plural dynamic dampers are different from each other. In addition, because one of the plural dynamic dampers is arranged at one side and the rest of the dynamic dampers is arranged at the other side in an axial direction of the torque fluctuation reducing apparatus relative to the first main damper and the second main damper, forces applied to the main dampers are well-balanced, which is favorable to strength of the apparatus.

According to the aforementioned embodiments, each of the plural dynamic dampers includes a different resonance frequency from each other.

According to the above-described configuration, vibrations may be restricted at the resonance points of the plural systems because characteristic properties of the plural dynamic dampers are different from each other. In addition, because one of the plural dynamic dampers is arranged at one side and the rest of the dynamic dampers is arranged at the other side in an axial direction of the torque fluctuation reducing apparatus relative to the first main damper and the second main damper, forces applied to the main dampers are well-balanced, which is favorable to strength of the apparatus.

According to another aspect of this disclosure, one or both of the elastic force and the inertia body of each of the plural dynamic dampers is different from each other.

According to the above-described configuration, vibrations may be restricted at the resonance points of the plural systems because characteristic properties of the plural dynamic dampers are different from each other. In addition, because one of the plural dynamic dampers is arranged at one side and the rest of the dynamic dampers is arranged at the other side in an axial direction of the torque fluctuation reducing apparatus relative to the first main damper and the second main damper, forces applied to the main dampers are well-balanced, which is favorable to strength of the apparatus.

According to another aspect of this disclosure, one or more of the plural dynamic dampers is arranged at one side and the rest of the dynamic dampers is arranged at the other side in an axial direction of the torque fluctuation reducing apparatus relative to the first main damper and the second main damper.

According to the above-described configuration, vibrations may be restricted at the resonance points of the plural systems because characteristic properties of the plural dynamic dampers are different from each other. In addition, because one of the plural dynamic dampers is arranged at one side and the rest of the dynamic dampers is arranged at the other side in an axial direction of the torque fluctuation reducing apparatus relative to the first main damper and the second main damper, forces applied to the main dampers are well-balanced, which is favorable to strength of the apparatus.

According to another aspect of this disclosure, part of the inertia body of at least one of the plural dynamic dampers is set to be immersed in the viscous medium accumulating at a radially outward portion in the chamber when the torque fluctuation reducing apparatus rotates.

According to the above-described configuration, by optimizing or adjusting a resistance of the inertia body of the dynamic damper, abnormal noises for suppressing movement of the inertia body are restricted from occurring in a case where a transitional vibration occurs at, for example, at a start-up of the drive source.

According to the invention, the inertia body, the part of which is immersed in the viscous medium when the torque fluctuation reducing apparatus rotates, includes a recessed-and-protruding portion which increases resistance when the inertia body moves in the viscous medium.

According to the above-described configuration, the vibration damping performance is improved by adjusting or optimizing the resistance of the inertia body, and thus the abnormal noises for suppressing the movement of the inertia body of the dynamic damper are restricted from occurring.

According to another aspect of this disclosure, the inertia body, the part of which is immersed in the viscous medium when the torque fluctuation reducing apparatus rotates, is provided with a block which increases resistance when the inertia body moves in the viscous medium.

According to the above-described configuration, the vibration damping performance is improved by adjusting or optimizing the resistance of the inertia body, and thus the abnormal noises for suppressing the movement of the inertia body of the dynamic damper are restricted from occurring.

According to another aspect of this disclosure, the inertia body, the part of which is immersed in the viscous medium when the torque fluctuation reducing apparatus rotates, includes a recessed portion which reduces resistance when the inertia body moves in the viscous medium.

According to the above-described configuration, an influence of the viscous medium is reduced by the recessed portion, and an original or intended damping performance is ensured.

According to another aspect of this disclosure, the viscous medium corresponds to oil or grease of which viscosity resistance increases as the oil or the grease cools.

According to the above-described configuration, the viscosity resistance of the viscous medium increases in a state where the drive source is cold, and thus the resonance is restricted and the start-up performance of the drive source may be enhanced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view schematically illustrating a configuration of a torque fluctuation reducing apparatus according to an exemplary first embodiment disclosed here, which is taken along line I-I in Fig. 2;
Fig. 2 is a partially cutaway plan view schematically illustrating the configuration of the torque fluctuation reducing apparatus according to the exemplary first embodiment;
Fig. 3A is a cross-sectional view taken along IIIA-IIIA in Fig. 3B, which schematically illustrates a configuration of a center plate and an inertia body of a first dynamic damper of the torque fluctuation reducing apparatus according to the exemplary first embodiment;
Fig. 3B is a partial plan view schematically illustrating the configuration of the center plate and the inertia body of the first dynamic damper of the torque fluctuation reducing apparatus according to the exemplary first embodiment;
Fig. 4 is a schematic view illustrating an example of a power transmission path including the torque fluctuation reducing apparatus according to the exemplary first embodiment;
Fig. 5 is a diagram for explaining an operation of the torque fluctuation reducing apparatus according to the exemplary first embodiment;
Fig. 6A is a cross-sectional view taken along VIA-VIA in Fig. 6B, which schematically illustrates a configuration of a center plate of a first dynamic damper of a torque fluctuation reducing apparatus according to a second embodiment according to the claimed invention disclosed here;
Fig. 6B is a partial plan view schematically illustrating the configuration of the center plate of the first dynamic damper of the torque fluctuation reducing apparatus according to the second embodiment;
Fig. 7A is a cross-sectional view taken along VIIA-VIIA in Fig. 7B, which schematically illustrates a configuration of a center plate of a first dynamic damper of a torque fluctuation reducing apparatus according to a third embodiment according to the claimed invention disclosed here;
Fig. 7B is a partial plan view schematically illustrating the configuration of the center plate of the first dynamic damper of the torque fluctuation reducing apparatus according to the third embodiment;
Fig. 8A is a cross-sectional view taken along VIIIA-VIIIA in Fig. 8B, which schematically illustrates a configuration of a center plate of a first dynamic damper of a torque fluctuation reducing apparatus according to an exemplary fourth embodiment disclosed here;
Fig. 8B is a partial plan view schematically illustrating the configuration of the center plate of the first dynamic damper of the torque fluctuation reducing apparatus according to the exemplary fourth embodiment;
Fig. 9A is a cross-sectional view taken along IXA-IXA in Fig. 9B, which schematically illustrates a configuration of a center plate and an inertia body block of a first dynamic damper of a torque fluctuation reducing apparatus according to an exemplary fifth embodiment disclosed here;
Fig. 9B is a partial plan view schematically illustrating the configuration of the center plate and the inertia body block of the first dynamic damper of the torque fluctuation reducing apparatus according to the exemplary fifth embodiment;
Fig. 9C is a plan view schematically illustrating the configuration of the center plate and the inertia body block of the first dynamic damper of the torque fluctuation reducing apparatus according to the exemplary fifth embodiment, which is seen from a direction of an arrow Z in Fig. 9B;
Fig. 10A is a cross-sectional view taken along XA-XA in Fig. 10B, which schematically illustrates a configuration of a center plate of a first dynamic damper of a torque fluctuation reducing apparatus according to an exemplary sixth embodiment disclosed here;
Fig. 10B is a partial plan view schematically illustrating the configuration of the center plate of the first dynamic damper of the torque fluctuation reducing apparatus according to the exemplary sixth embodiment;
Fig. 10C is a plan view schematically illustrating the configuration of the center plate of the first dynamic damper of the torque fluctuation reducing apparatus according to the exemplary sixth embodiment, which is seen from a direction of an arrow Z in Fig. 10B;
Fig. 10D is a plan view schematically illustrating a configuration of a center plate of a first dynamic damper of a torque fluctuation reducing apparatus according to a modification of the exemplary sixth embodiment, which is seen from a direction which corresponds to the direction of the arrow Z in Fig. 10B;
Fig. 11A is a cross-sectional view taken along XIA-XIA in Fig. 11B, which schematically illustrates a configuration of a center plate of a first dynamic damper of a torque fluctuation reducing apparatus according to an exemplary seventh embodiment disclosed here; and
Fig. 11B is a partial plan view schematically illustrating the configuration of the center plate of the first dynamic damper of the torque fluctuation reducing apparatus according to the exemplary seventh embodiment.

### DETAILED DESCRIPTION

### [Overview of embodiments]

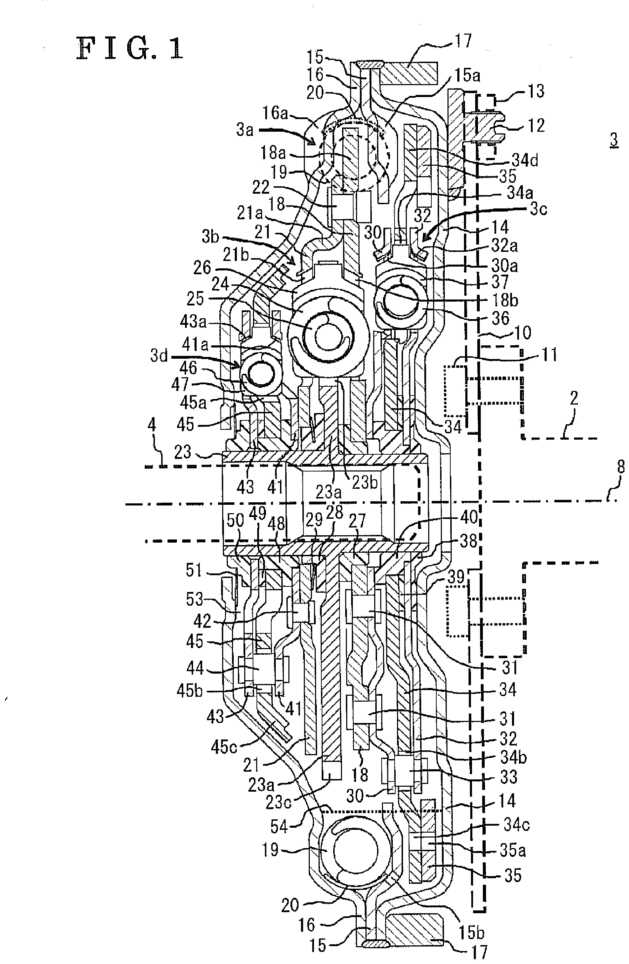

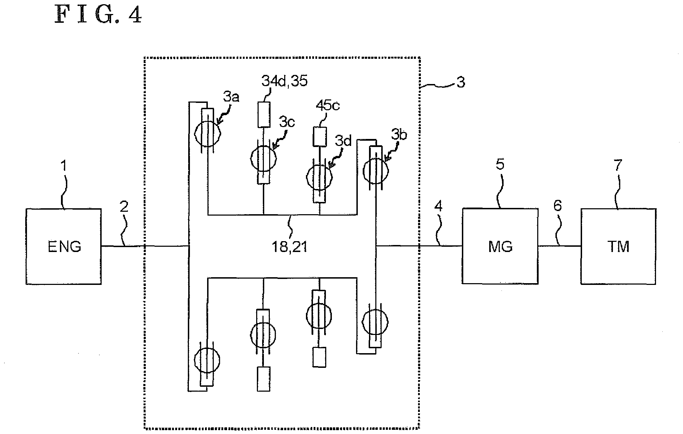

Embodiments of a torque fluctuation reducing apparatus are disclosed in the following, wherein the second and third embodiments correspond to the claimed invention, and the first, fourth, fifth, sixth and seventh embodiments are exemplary embodiments that do not form part of the invention but represent background art that is useful for understanding the invention. A torque fluctuation reducing apparatus according to embodiments disclosed here, includes a first main damper (the first main damper 3a in Fig. 1) provided on a power transmission path between a drive source (an engine or ENG 1 in Fig. 4) and a transmission (the transmission or TM 7 in Fig. 4), and reducing, by using an elastic force, fluctuation torque generated between the drive source and the transmission, a second main damper (the second main damper 3b in Fig. 1) provided at a transmission-side relative to the first main damper to be in series with the first main damper on the power transmission path, and reducing, by using an elastic force, the fluctuation torque generated between the drive source and the transmission, the second main damper including a vibration damping property which is different from a vibration damping property of the first main damper, a dynamic damper (first and second dynamic dampers 3c, 3d in Fig. 1) provided on the power transmission path between the first main damper and the second main damper, and restricting vibration at a specific resonance point of a drive system on the power transmission path by using an inertia body (an inertia body portion 34d, an inertia body 35, an inertia body portion 45c in Fig. 1) and an elastic force, a chamber (the chamber 53 in Fig. 1) accommodating the first main damper and the second main damper, and the dynamic damper, and a viscous medium (the viscous medium 54 in Fig. 1) enclosed in part of the chamber.

In embodiments disclosed here, reference numerals are for enhancing understanding and are not provided to intend to limit the embodiments to those illustrated in the drawings. The embodiments related to this disclosure will be explained hereunder with reference to the drawings.

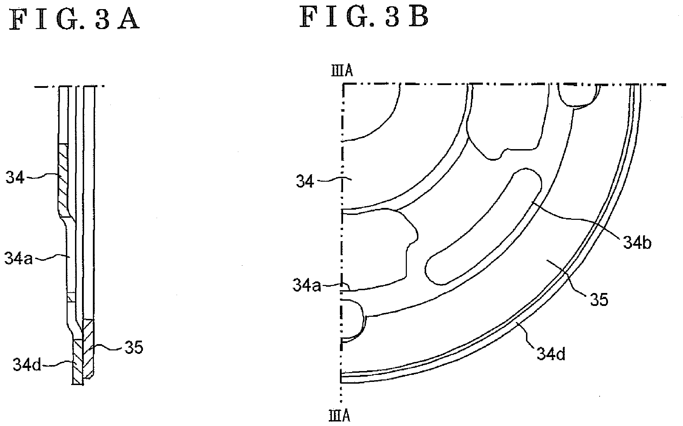

A torque fluctuation reducing apparatus according to an exemplary first embodiment will be explained with reference to the drawings (refer to Figs. 1 to 4).

A torque fluctuation reducing apparatus 3 is provided on a power transmission path between an engine 1 and a transmission 7 (between the engine 1 and a motor generator 5 in a case where the motor generator 5 is provided as illustrated in Fig. 4), and reduces (absorbs, restricts) fluctuation torque generated between the engine 1 and the transmission 7 (refer to Fig. 4). A rotative power of the engine 1 is inputted via a crankshaft 2 to the torque fluctuation reducing apparatus 3, and the torque fluctuation reducing apparatus 3 outputs the inputted rotative power via a rotational shaft 4, the motor generator 5 and a rotational shaft 6 toward the transmission 7.

Here, the engine 1 serves as a drive source (an internal combustion engine) which explodes and combusts fuel in a cylinder, and causes the rotative power to be outputted from the crankshaft 2 by thermal energy associated to the explosion and the combustion. The engine 1 is connected via the crankshaft 2 to the torque fluctuation reducing apparatus 3 (refer to Fig. 4). In addition, the motor generator 5 is a generator motor which drives as an electric motor and drives also as an electric generator. The motor generator 5 is connected via the rotational shaft 4 to the torque fluctuation reducing apparatus 3, and is connected via the rotational shaft 6 to the transmission 7 (refer to Fig. 4). In addition, the transmission 7 (refer to Fig. 4) is a mechanism which changes speed of the rotative power from the rotational shaft 6 and outputs the rotative power, whose speed has been changed, toward a differential arrangement.

The torque fluctuation reducing apparatus 3 includes plural main dampers (a fist main damper 3a and a second main damper 3b) which are arranged in series with each other on the power transmission path between the crankshaft 2 and the rotational shaft 4. The torque fluctuation reducing apparatus 3 includes a dynamic damper, for example, plural dynamic dampers (a first dynamic damper 3c and a second dynamic damper 3d) which are arranged in parallel with each other on the power transmission path (at intermediate plates 18, 21) between the first main damper 3a and the second main damper 3b (refer to Figs. 1, 2 and 4).

The first main damper 3a and the second main damper 3b are mechanisms which transmit the power from the engine 1 to the transmission 7, and reduce (absorb, restrict) the fluctuation torque generated between the engine 1 and the transmission 7 by using an elastic force. The first main damper 3a is set in such a manner that a vibration damping property of the first main damper 3a is different from a vibration damping property of the second main damper 3b (respective spring constants of the first main damper 3a and the second main damper 3b are set to be different from each other). The first main damper 3a is arranged radially outwardly (that is, outwardly in a radial direction where a central axis 8 is a center of rotation of the crankshaft 2 and other members) relative to the second main damper 3b. Thus, a space of the apparatus in an axial direction may be reduced.

The first dynamic damper 3c and the second dynamic damper 3d are mechanisms which restrict vibrations, by using the elastic force, at a specific resonance point of a drive system on the power transmission path. The first dynamic damper 3c is set in such a manner that a characteristic property of the first dynamic damper 3c is different from a characteristic property of the second dynamic damper 3d. The first dynamic damper 3c is the mechanism where an inertia body (an inertia body portion 34d, an inertia body 35) is elastically, that is, via a coil spring 36, connected to side plates 30, 32. The second dynamic damper 3d is the mechanism where the inertia body (an inertia body portion 45c) is elastically, that is, via a coil spring 46, connected to side plates 41, 43. The first dynamic damper 3c is set in such a manner that a resonance frequency of the first dynamic damper 3c is different from a resonance frequency of the second dynamic damper 3d (one or both of the spring constant and a value of the inertia is set to be different between the first dynamic damper 3c and the second dynamic damper 3d). Thus, the vibrations may be restricted at resonance points of plural systems. The first dynamic damper 3c is arranged at an engine-side (at the right side in Fig. 1) relative to the main dampers 3a, 3b, and the second dynamic damper 3d is arranged at a transmission-side (at the left side in Fig. 1) relative to the main dampers 3a, 3b. That is, one of the dynamic dampers 3c, 3d is arranged at one side and the rest of the dynamic dampers 3c, 3d is arranged at the other side in the axial direction of the torque fluctuation reducing apparatus 3 relative to the first main damper 3a and the second main damper 3b. Accordingly, forces applied to the main dampers 3a, 3b are well-balanced, which is favorable to strength of the apparatus.

According to the torque fluctuation reducing apparatus 3, the main dampers 3a, 3b and the dynamic dampers 3c, 3d are accommodated in a chamber (the chamber 53 in Fig. 1) which is surrounded by a cover plate 16, a disc spring 51, a thrust member 50, a hub member 23, a thrust member 38, a cover plate 14 and a plate 15), and a viscous medium 54 is enclosed in the chamber 53 partly, that is, the viscous medium 54 is enclosed in part of the chamber 53. The viscous medium 54 is enclosed in the chamber 53 so that at least part of the first main damper 3a and part of the inertia body (the inertia body portion 34d, the inertia body 35) of the first dynamic damper 3c are immersed in, that is, are in contact with the viscous medium 54 in a case where the torque fluctuation reducing apparatus 3 rotates (that is, in a state where the viscous medium 54 accumulates or stays at a radially outward portion in the chamber 53 due to a centrifugal force). Accordingly, component members of the first main damper 3a are restricted from wearing. In addition, by optimizing or adjusting a resistance of inertia of the first dynamic damper 3c, abnormal noises are restricted in a case where a transitional vibration occurs at, for example, an engine start-up. These abnormal noises are generated when movement of the inertia, that is, the inertia body portion 34d and the inertia body 35, of the first dynamic damper 3c is restrained. As the viscous medium 54, for example, oil or grease whose viscosity resistance increases as the oil or the grease cools may be used. In a state where the engine 1 is cold, a rotational resistance of the engine 1 increases and a start-up performance of the engine 1 deteriorates, and therefore the damper is likely to resonate. However, by using the oil or grease whose viscosity resistance increases when the engine is cold, the resonance is restricted and the start-up performance of the engine 1 may be enhanced. In addition, the occurrence of the abnormal noises for suppressing the movement of the inertia of the first dynamic damper 3c is restricted.

The torque fluctuation reducing apparatus 3 includes, as main components thereof, a drive plate 10, a bolt 11 (for example, plural bolts 11), a set bolt 12 (for example, plural set bolts 12), a nut 13 (for example, plural nuts 13), the cover plate 14, the plate 15, the cover plate 16, an inertia body 17, the intermediate plate 18, a coil spring 19, a guide member 20, the intermediate plate 21, a rivet 22 (for example, plural rivets 22), the hub member 23, coil springs 24, 25, a seat member 26, thrust members 27, 28, a disc spring 29, the side plate 30, a rivet 31 (for example, plural rivets 31), the side plate 32, a rivet 33, a center plate 34, the inertia body 35, the coil spring 36, a seat member 37, thrust members 38, 39, 40, the side plate 41, a rivet 42 (for example, plural rivets 42), the side plate 43, a rivet 44, a center plate 45, the coil spring 46, a seat member 47, thrust members 48, 49, 50 and the disc spring 51.

The drive plate 10 is an annular-shaped and disc-shaped plate for transmitting (inputting) the rotative power from the crankshaft 2 to the torque fluctuation reducing apparatus 3 (refer to Fig. 1). The drive plate 10 is fastened (connected) to the crankshaft 2 at a radially inward portion of the drive plate 10 by means of the plural bolts 11. Thus, the drive plate 10 rotates integrally with the crankshaft 2. The drive plate 10 is fastened by means of the plural nuts 13 to the corresponding set bolts 12 at a radially outward portion of the drive plate 10.

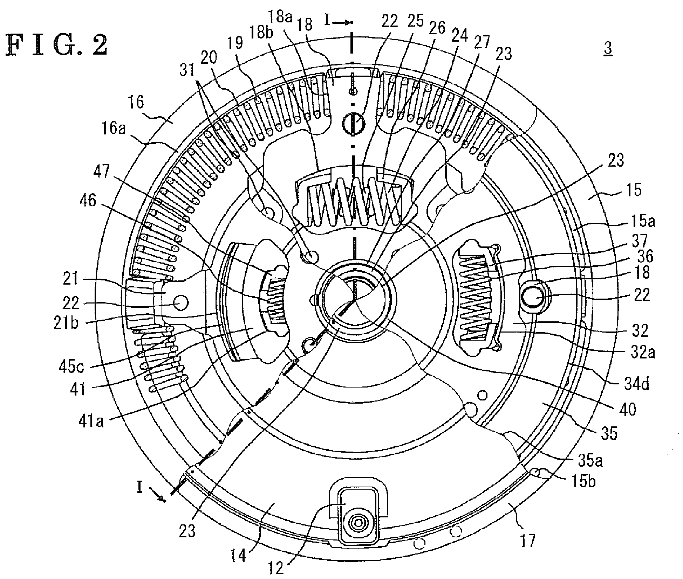

Each of the set bolts 12 is a block-shaped member for fastening the drive plate 10 by means of the corresponding nut 13 (refer to Figs. 1 and 2). The set bolt 12 is fixed by welding at the cover plate 14 at a surface of the cover plate 14 which is at a side of the crankshaft 2, that is, the surface which faces a direction of the crankshaft 2, at plural positions. The set bolt 12 includes a male thread portion screwed into the nut 13. The set bolt 12 is fastened (connected) to the drive plate 10 by means of the nut 13, and therefore the set bolt 12 rotates integrally with the drive plate 10 and with the cover plate 14.

The cover plate 14 serves as a first power transmission member which is formed in an annular shape and which covers an engine-side (the right side in Fig. 1) of the chamber 53 (refer to Figs. 1 and 2). The cover plate 14 is closely attached to the cover plate 16 via the plate 15, at a radially outward portion of the cover plate 14 across an entire circumference thereof, and is fixed by welding to the plate 15 and to the cover plate 16. Thus, the cover plate 14 rotates integrally with the plate 15 and with the cover plate 16, and the viscous medium 54 inside the chamber 53 does not leak out from a connection portion at which the cover plate 14, the plate 15 and the cover plate 16 are joined to one another. The inertia body 17 formed in an annular shape is fixed by welding to the cover plate 14, at the radially outward portion of the cover plate 14. Thus, the cover plate 14 rotates integrally with the inertia body 17. The plural set bolts 12 are fixed by welding to the cover plate 14 at the surface of the cover plate 14 which is at the side of the drive plate 10, that is, the surface which faces the direction of the drive plate 10. The cover plate 14 extends radially inwardly relative to the coil springs 19, 24, 25, 36, 46 of the main dampers 3a, 3b and the dynamic dampers 3c, 3d, respectively. The cover plate 14 is slidably in pressure contact with the thrust member 38 across an entire circumference thereof at the radially inner portion of the cover plate 14. Thus, a distance is assured from the portion where the cover plate 14 is slidably in pressure contact with the thrust member 38 to a portion where the viscous medium, which exists at the radially outward portion in the chamber 53, splashes, and accordingly the viscous medium 54 is restricted from leaking out. In addition, because a sliding radius of the cover plate 14 and the thrust member 38, that is, a distance between a center of the rotation of the cover plate 14 and of the thrust member 38, and a portion at which the cover plate 14 and the thrust member 38 are in contact with each other, is small, hysteresis may be set to be small, thereby enhancing a performance of the torque fluctuation reducing apparatus 3.

The plate 15 is an annular-shaped member and the component member of the first main damper 3a (refer to Figs. 1 and 2). The plate 15 is disposed between the cover plate 14 and the cover plate 16 so as to be closely attached to the cover plate 14 and to the cover plate 16 at a radially outward portion of the plate 15. The plate 15 is fixed by welding to the cover plates 14, 16. Thus, the plate 15 rotates integrally with the cover plate 14 and the cover plate 16, and the viscous medium 54 inside the chamber 53 does not leak out from the connection portion at which the plate 15, the cover plate 14 and the cover plate 16 are joined to one another. The plate 15 is arranged at the engine-side (the right side in Fig. 1) relative to the intermediate plate 18. The plate 15 includes an accommodation portion 15a which is formed in a form of a bag for accommodating therein the coil spring 19 and the guide member 20. The plate 15 supports the centrifugal force of the coil spring 19 and of the guide member 20, and a component force acting in the radial direction in a case where the coil spring 19 is compressed. The accommodation portion 15a is configured to be in contact with and out of contact from the coil spring 19 at circumferential end surfaces of the accommodation portion 15a. In a case where a torsion is not generated between the plate 15 and the cover plate 16, and the intermediate plate 18, the accommodation portion 15a is in contact with both end portions of the coil spring 19 or the accommodation portion 15a is positioned close to the end portions of the coil spring 19 while leaving a slight play between the accommodation portion 15a and the coil spring 19. In a case where the torsion is generated between the plate 15 and the cover plate 16, and the intermediate plate 18, the accommodation portion 15a is in contact with one of the end portions of the coil spring 19. The plate 15 includes a through hole 15b at the accommodation portion 15a. The through hole 15b is a hole for allowing the viscous medium 54 to communicate between an inside and an outside of the accommodation portion 15a.

The cover plate 16 serves as the first power transmission member which is formed in an annular shape and which covers a transmission-side (the left side in Fig. 1) of the chamber 53, and is the component member of the first main damper 3a (refer to Figs. 1 and 2). The cover plate 16 serves also as the first main damper 3a, and accordingly, the number of parts and components is reduced. The cover plate 16 is closely attached to the cover plate 14 via the plate 15, at a radially outward portion of the cover plate 16 across an entire circumference thereof, and is fixed by welding to the plate 15 and to the cover plate 14. Thus, the cover plate 16 rotates integrally with the plate 15 and with the cover plate 14, and the viscous medium 54 inside the chamber 53 does not leak out from the connection portion at which the cover plate 16, the plate 15 and the cover plate 14 are joined to one another. The cover plate 16 is arranged at the transmission-side (the left side in Fig. 1) relative to the intermediate plate 18. The cover plate 16 includes an accommodation portion 16a which is formed in a form of a bag for accommodating therein the coil spring 19 and the guide member 20. The cover plate 16 supports the centrifugal force of the coil spring 19 and of the guide member 20, and the component force acting in the radial direction in a case where the coil spring 19 is compressed. The accommodation portion 16a is configured to be in contact with and out of contact from the coil spring 19 at circumferential end surfaces of the accommodation portion 16a. In a case where the torsion is not generated between the cover plate 16 and the plate 15, and the intermediate plate 18, the accommodation portion 16a is in contact with the end portions of the coil spring 19 or the accommodation portion 16a is positioned close to the end portions of the coil spring 19 while leaving a slight play between the accommodation portion 16a and the coil spring 19. In a case where the torsion is generated between the cover plate 16 and the plate 15, and the intermediate plate 18, the accommodation portion 16a is in contact with one of the end portions of the coil spring 19. The cover plate 16 extends radially inwardly relative to the coil springs 19, 24, 25, 36, 46 of the main dampers 3a, 3b and the dynamic dampers 3c, 3d, respectively. The cover plate 16, at a radially inward portion thereof, is slidably in pressure contact with an outer circumferential end portion of the disc spring 51 across an entire circumference thereof. Thus, a distance is assured from the portion where the cover plate 16 is slidably in pressure contact with the disc spring 51 to the portion where the viscous medium, which exists at the radially outward portion in the chamber 53, splashes, and accordingly the viscous medium 54 is restricted from leaking out. In addition, because a sliding radius of the cover plate 16 and the disc spring 51 is small, the hysteresis may be set to be small, thereby enhancing the performance of the torque fluctuation reducing apparatus 3.

The inertia body 17 is an annular-shaped member which is fixed by welding at the cover plate 14, at the surface of the cover plate 14 which is at the engine-side (the right side in Fig. 1) (refer to Figs. 1 and 2).

The intermediate plate 18 is an annular-shaped member which is disposed between the plate 15 and the cover plate 16, and is the component member of the first main damper 3a and of the second main damper 3b (refer to Figs. 1 and 2). The intermediate plate 18 is arranged at radially inwardly relative to the connection portion at which the plate 15 and the cover plate 16 are connected to each other, in a manner that a predetermined distance is provided between the connection portion and the intermediate plate 18.

The intermediate plate 18 includes, at an outer circumferential portion thereof, a window portion 18a defined by a cut-out portion for accommodating the coil spring 19 and the guide member 20. The window portion 18a is the component part of the first main damper 3a. The window portion 18a is configured to be in contact with and out of contact from the coil spring 19 at circumferential end surfaces of the window portion 18a. In a case where the torsion is not generated between the intermediate plate 18, and the plate 15 and the cover plate 16, the window portion 18a is in contact with the end portions of the coil spring 19 or the window portion 18a is positioned close to the end portions of the coil spring 19 while leaving a slight play between the window portion 18a and the coil spring 19. In a case where the torsion is generated between the intermediate plate 18, and the plate 15 and the cover plate 16, the window portion 18a is in contact with one of the end portions of the coil spring 19. The intermediate plate 21 is fixed by means of the plural rivets 22 to the intermediate plate 18, at a radially inward portion of the intermediate plate 18 relative to the window portion 18a, at the transmission-side (at the left side in Fig. 1) of the intermediate plate 18. Thus, the intermediate plate 18 and the intermediate plate 21 rotate integrally with each other. At a radially inward portion of the intermediate plate 18 relative to the rivets 22, the intermediate plate 18 is arranged in a manner that a predetermined distance in the axial direction is provided relative to the intermediate plate 21, that is, the predetermined distance is provided between the intermediate plates 18 and 21.

The intermediate plate 18 is arranged at the engine-side (at the right side in Fig. 1) relative to a flange portion 23a of the hub member 23. At a radially inward portion of the intermediate plate 18 relative to the rivets 22, the intermediate plate 18 includes a window portion 18b for accommodating the seat member 26 (i.e., a first seat member) and the coil springs 24, 25 (i.e., first coil springs). The window portion 18b is the component part of the second main damper 3b. At respective circumferential end surfaces of the window portion 18b, the window portion 18b is configured to come into contact with and out of contact from the seat members 26. In a case where the torsion is not generated between the intermediate plates 18, 21 and the hub member 23, the window portion 18b is in contact with the seat members 26 arranged at respective ends of each of the coil springs 24, 25 or the window portion 18b is positioned close to the seat members 26 while leaving a slight play between the window portion 18b and the seat members 26. The window portion 18b is in contact with one of the seat members 26 in a case where the torsion is generated between the intermediate plates 18, 21 and the hub member 23. At a surface of the intermediate plate 18 on the engine-side (at the right side in Fig. 1), the side plate 30 is fixed by means of the plural rivets 31 to the intermediate plate 18. Thus, the intermediate plate 18 and the side plate 30 rotate integrally with each other. At an inner circumferential portion of the intermediate plate 18, the intermediate plate 18 engages with the thrust member 27 so as not to be rotatable but so as to be movable in the axial direction relative to the thrust member 27. The intermediate plate 18 is, at an inner circumferential end portion thereof, rotatably supported by the hub member 23 via the thrust member 27.

The coil spring 19 is the component member of the first main damper 3a (refer to Figs. 1 and 2). The coil spring 19 is accommodated in the accommodation portion 15a of the plate 15, the accommodation portion 16a of the cover plate 16 and the window portion 18a of the intermediate plate 18. The coil spring 19 is in contact with the circumferential end surfaces of the respective accommodation portions 15a, 16a and the window portion 18a. The coil spring 19 is compressed in a case where the torsion is generated between the plate 15 and the cover plate 16, and the intermediate plate 18. In a case where the torsion is generated between the plate 15 and the cover plate 16, and the intermediate plate 18, and therefore the coil spring 19 is compressed to a substantially minimum length thereof, the coil spring 19 serves as a stopper for restricting the torsion between the plate 15 and the cover plate 16, and the intermediate plate 18. The coil spring 19 is set to have a spring constant which differs from spring constants of the coil springs 24, 25. For the coil spring 19, an arc spring having a circular arc-shape, which is formed so as to be expanded and compressed in a circumferential direction thereof, may be used. Thus, a torsional angle of the first main damper 3a is set to be large, and accordingly a torsional rigidity thereof is reduced, which lowers a resonance rotation speed.

The guide member 20 is the component member of the first main damper 3a. In a case where the centrifugal force works, the guide member 20 reduces wear occurring between the accommodation portion 15a of the plate 15 and the coil spring 19 (i.e., an arc coil spring), and between the accommodation portion 16a of the cover plate 16 and the coil spring 19, and guides the expansion and compression, that is, the compression and return, of the coil spring 19. The guide member 20 is disposed between the accommodation portions 15a, 16a and the coil spring 19 in the radial direction.

The intermediate plate 21 is an annular-shaped member which is provided at the transmission-side (the left side in Fig. 1) relative to the flange portion 23a of the hub member 23, and is the component member of the second main damper 3b (refer to Figs. 1 and 2). The intermediate plate 21 is, at an outer circumferential portion thereof, fixed to the intermediate plate 18 by means of the plural rivets 22. Thus, the intermediate plate 21 and the intermediate plate 18 rotate integrally with each other. The intermediate plate 21 includes a stopper portion 21a at a radially inward portion of the intermediate plate 21 relative to the rivets 22. The stopper portion 21a is a portion which restricts the torsion of the second main damper 3b at a predetermined angle. The stopper portion 21a restricts the torsion of the second main damper 3b by being in contact with a stopper portion 23c of the hub member 23 in a case where the torsion is generated at the second main damper 3b. At a radially inward portion of the intermediate plate 21 relative to the stopper portion 21a, the intermediate plate 21 is arranged in a manner that the predetermined distance in the axial direction is provided relative to the intermediate plate 18. At a radially inward portion of the intermediate plate 21 relative to the rivets 22, the intermediate plate 21 includes a window portion 21b for accommodating the seat members 26 and the coil springs 24, 25. The window portion 21b is configured to be in contact with and out of contact from the seat members 26 at respective circumferential end surfaces of the window portion 21b. In a case where the torsion is not generated between the intermediate plates 18, 21 and the hub member 23, the window portion 21b is in contact with the seat members 26 arranged at respective ends of each of the coil springs 24, 25 or the window portion 21b is positioned close to the seat members 26 while leaving a slight play between the window portion 21b and the seat members 26. The window portion 21b is in contact with one of the seat members 26 in a case where the torsion is generated between the intermediate plates 18, 21 and the hub member 23. The side plate 41 is fixed by means of the plural rivets 42 to the intermediate plate 21, at a surface of the intermediate plate 21 at the transmission-side (at the left side in Fig. 1). Thus, the intermediate plate 21 and the side plate 41 rotate integrally with each other. At an inner circumferential portion of the intermediate plate 21, the intermediate plate 21 engages with the thrust member 28 so as not to be rotatable and so as to be movable in the axial direction relative to the thrust member 28. The intermediate plate 21 supports an outer circumferential end portion of the disc spring 29. The intermediate plate 21 is, at an inner circumferential end portion thereof, rotatably supported by the hub member 23 via the thrust member 28.

The rivet 22 is a member for fixing by staking the intermediate plate 18 and the intermediate plate 21 to each other (refer to Figs. 1 and 2).

The hub member 23 is a second power transmission member which is formed in cylindrical-shaped and outputs the rotative power of the torque fluctuation reducing apparatus 3 toward the rotational shaft 4, and is the component member of the second main damper 3b (refer to Fig. 1). The hub member 23 includes the flange portion 23a extending radially outwardly from a predetermined portion of an outer periphery of a cylinder portion of the cylindrical shape. The hub member 23, at an inner circumferential surface thereof, is engaged by spline with the rotational shaft 4. At an outer circumference of the hub member 23, the hub member 23 rotatably supports the intermediate plate 18 via the thrust member 27 and rotatably supports the intermediate plate 21 via the thrust member 28. In addition, the hub member 23 rotatably supports the side plate 32 and the center plate 34 via the thrust member 40 at the outer circumference of the hub member 23, and rotatably supports the thrust member 38. In addition, the hub member 23, at the outer circumference thereof, rotatably supports the side plate 41 and the center plate 45 via the thrust member 48, and rotatably supports the thrust member 50. The flange portion 23a includes a window portion 23b for accommodating the coil springs 24, 25 and the seat members 26. The window portion 23b is configured to come into contact with and out of contact from the seat members 26 at respective circumferential end surfaces of the window portion 23b. In a case where the torsion is not generated between hub member 23 and the intermediate plates 18, 21, the window portion 23b is in contact with the seat members 26 at the respective ends of each of the coil springs 24, 25 or the window portion 23b is positioned close to the seat members 26 while leaving a slight play between the window portion 23b and the seat members 26. The window portion 23b is configured to be in contact with the seat members 26 in a case where the torsion is generated between the hub member 23 and the intermediate plates 18, 21. At a radially inward portion of the flange portion 23a, at surfaces thereof in the axial direction, the flange portion 23a is slidably held by the thrust members 27, 28 in a sandwiched manner therebetween. The flange portion 23a includes the stopper portion 23c at plural positions at an outer circumferential end portion of the flange portion 23a, and each of the stopper portions 23c protrudes radially outwardly. The stopper portion 23c is a portion which restricts the torsion of the second main damper 3b at the predetermined angle. The stopper portion 23c restricts the torsion of the second main damper 3b by being in contact with the stopper portion 21a of the intermediate plate 21 in a case where the torsion is generated at the second main damper 3b.

The coil springs 24, 25 are the component members of the second main damper 3b (refer to Figs. 1 and 2). The coil spring 25 is arranged inside a winding wire of the coil spring 24. The coil springs 24, 25 are accommodated in the window portions 18b, 21b, 23b which are formed at the intermediate plates 18, 21 and the hub member 23, respectively, and are in contact with the seat members 26 arranged at the respective ends of the coil springs 24, 25. In a case where the intermediate plates 18, 21 and the hub member 23 rotate relative to each other, the coil springs 24, 25 are compressed and absorb rotational fluctuation.

The seat members 26 are the component members of the second main damper 3b (refer to Figs. 1 and 2). The seat members 26 are accommodated in the window portions 18b, 21b, 23b which are formed at the intermediate plates 18, 21 and the hub member 23, respectively, in a manner that each of the seat members 26 is arranged between the circumferential end surfaces of the respective window portions 18b, 21b, 23b and corresponding end portions of each of the coil springs 24, 25. The seat members 26 may be made of resin in order to reduce the wear of the coil springs 24, 25, the intermediate plates 18, 21 and the hub member 23.

The thrust member 27 is an annular-shaped member arranged between the intermediate plate 18 and the hub member 23 (refer to Fig. 1). The thrust member 27 is arranged between the intermediate plate 18 and the flange portion 23a in the axial direction. The thrust member 27 engages with the intermediate plate 18 so as not to be rotatable and so as to be movable in the axial direction relative to the intermediate plate 18. The thrust member 27 is slidably in pressure contact with the flange portion 23a. The thrust member 27 is interposed also between the intermediate plate 18 and the hub member 23 in the radial direction, thereby serving as a slide bearing (a bush) for rotatably supporting the intermediate plate 18 at the hub member 23.

The thrust member 28 is an annular-shaped member arranged between the intermediate plate 21 and the hub member 23 (refer to Fig. 1). The thrust member 28 is arranged between the disc spring 29 and the flange portion 23a in the axial direction. The thrust member 28 engages with the intermediate plate 21 so as not to be rotatable but so as to be movable in the axial direction relative to the intermediate plate 21. The thrust member 28 is biased or pushed by the disc spring 29 toward the flange portion 23a, and is slidably in pressure contact with the flange portion 23a. The thrust member 28 is interposed also between the intermediate plate 21 and the hub member 23 in the radial direction, thereby serving as a slide bearing (a bush) for rotatably supporting the intermediate plate 21 at the hub member 23.

The disc spring 29 is a disc-shaped spring which is arranged between the thrust member 28 and the intermediate plate 21, and biases or pushes the thrust member 28 toward the flange portion 23a (refer to Fig. 1).

The side plate 30 is an annular-shaped member which is arranged at the transmission-side (the left side in Fig. 1) relative to the center plate 34, and is the component member of the first dynamic damper 3c. The side plate 30 is arranged in a manner that a predetermined distance is provided relative to the side plate 32 in the axial direction. The side plate 30 is, at an outer circumferential portion thereof, fixed to the side plate 32 by means of the rivet 33 to be integrally with the side plate 32. The side plate 30 is, at a radially inward portion thereof relative to the rivet 33, fixed to the intermediate plate 18 by means of the rivet 31. Thus, the side plate 30 and the intermediate plate 18 rotate integrally with each other. The side plate 30 includes a window portion 30a for accommodating the seat members 37 (i.e., a second seat member) and the coil spring 36 (i.e., a second coil spring) at a radially inward portion of the side plate 30 relative to the rivet 33, and circumferential end surfaces of the window portion 30a are configured to be in contact with and out of contact from the respective seat members 37. The side plate 30 is, at a radially inward portion thereof relative to the window portion 30a, in pressure contact with the thrust member 40 so as to be rotatable relative to the thrust member 40.

The rivet 31 is a member for fixing the side plate 30 to the intermediate plate 18 (refer to Fig. 1).

The side plate 32 is an annular-shaped member arranged at the engine-side (the right side in Fig. 1) relative to the center plate 34, and is the component member of the first dynamic damper 3c. The side plate 32 is arranged in a manner that a predetermined distance is provided in the axial direction relative to the side plate 30. The side plate 32 is, at an outer circumferential portion thereof, fixed to the side plate 30 to be integral with the side plate 30 by means of the rivet 33. Thus, the side plate 32 and the side plate 30 rotate integrally with each other. The side plate 32 includes a window portion 32a for accommodating the seat members 37 and the coil spring 36 at a radially inward portion of the side plate 32 relative to the rivet 33. Circumferential end surfaces of the window portion 32a are in contract with the corresponding seat members 37 so as to come into contact with and come out of contact from the seat members 37. The side plate 32 is, at a radially inward portion thereof relative to the window portion 32a, slidably held in a sandwiched manner between the thrust member 38 and the thrust member 39. The side plate 32 is, at an inner circumferential portion thereof, rotatably supported via the thrust member 40 by the hub member 23.

The rivet 33 is a member for integrally connecting the side plate 30 and the side plate 32 with each other (refer to Fig. 1). The side plate 30 is fixed at one end of the rivet 33 by staking and the side plate 32 is fixed at the other end of the rivet 33 by staking. An intermediate portion of the rivet 33 is inserted through a through hole 34b of the center plate 34. The rivet 33 restricts the torsion of the first dynamic damper 3c at a predetermined angle. The rivet 33 restricts the torsion of the first dynamic damper 3c by being in contact with a circumferential end surface of the through hole 34b in a case where the torsion is generated at the first dynamic damper 3c.

The center plate 34 is an annular member arranged between the side plate 30 and the side plate 32, and is the component member of the first dynamic damper 3c (refer to Figs. 1, 2 and 3). The center plate 34 includes, at an outer circumferential portion thereof, the inertia body portion 34d which is arranged to be extended to a radially outer side relative to the side plates 30, 32. The inertia body portion 34d is a portion which serves as the inertia of the first dynamic damper 3c. The inertia body 35 is fixed by welding or with a rivet to the inertia body portion 34d. Thus, the center plate 34 and the inertia body 35 rotate integrally with each other. The inertia body portion 34d includes a through hole 34c (i.e., a through hole). The through hole 34c is for restricting the movement of the inertia of the first dynamic damper 3c by restricting movement of the center plate 34 in the viscous medium 54. The center plate 34 includes, at a radially inward portion thereof relative to the inertia body portion 34d, the through hole 34b. The rivet 33 is inserted through the through hole 34b. The through hole 34b restricts the torsion of the first dynamic damper 3c at the predetermined angle. The through hole 34b restricts the torsion of the first dynamic damper 3c in a manner that the circumferential end surface of the through hole 34b is in contact with the rivet 33 in a case where the torsion is generated at the first dynamic damper 3c. The center plate 34 includes a window portion 34a for accommodating the coil spring 36 and the seat members 37. The window portion 34a is configured to come in contact with and out of contact from the seat members 37 at respective circumferential end surfaces of the window portion 34a. In a case where a torsion is not generated between the center plate 34 and the side plates 30, 32, the window portion 34a is in contact with the seat members 37 arranged at both sides of the coil spring 36 or the window portion 34a is positioned close to the seat members 37 while leaving a slight play between the window portion 34a and the seat members 37. In a case where the torsion is generated between the center plate 34 and the side plates 30, 32, the window portion 34a is in contact with one of the seat members 37. The center plate 34 is slidably held between the thrust member 40 and the thrust member 39 in a sandwiched manner in the axial direction. The center plate 34 is, at an inner circumferential end portion thereof, rotatably supported via the thrust member 40 at the hub member 23.

The inertia body 35 is an annular member serving as the inertia of the first dynamic damper 3c (refer to Figs. 1, 2 and 3). The inertia body 35 is fixed by welding or with a rivet to the inertia body portion 34d of the center plate 34. Thus, the inertia body 35 and the center plate 34 rotate integrally with each other. The inertia body 35 includes a through hole 35a (i.e., the through hole). The through hole 35a is for restricting the movement of the inertia of the first dynamic damper 3c by restricting movement of the inertia body 35 in the viscous medium 54.

The coil spring 36 is the component member of the first dynamic damper 3c (refer to Figs. 1 and 2). The coil spring 36 is accommodated in the window portions 30a, 32a and 34a which are formed at the side plates 30, 32 and the center plate 34, respectively, and is in contact with the seat members 37 arranged at the respective sides of the window portions 30a, 32a and 34a. The coil spring 36 is for setting the resonance frequency of the first dynamic damper 3c by means of a combination of the coil spring 36, and the inertia of the center plate 34 and of the inertia body 35.

The seat members 37 are the component members of the first dynamic damper 3c (refer to Figs. 1 and 2). The seat members 37 are accommodated in the window portions 30a, 32a and 34a which are formed at the side plates 30, 32 and the center plate 34, respectively, in a manner that each of the seat members 37 is disposed between the circumferential end surfaces of the respective window portions 30a, 32a, 34a and a corresponding end portion of the coil spring 36. The seat members 37 may be made of resin in order to reduce the wear of the coil spring 36, the side plates 30, 32 and the center plate 34.

The thrust member 38 is an annular member rotatably arranged at the outer circumference of the hub member 23 (refer to Fig. 1). The thrust member 38 is arranged between the cover plate 14 and the side plate 32 in the axial direction. The thrust member 38 is slidably in pressure contact with the cover plate 14, and is slidably in pressure contact with the side plate 32. The thrust member 38 serves as a seal member sealing a clearance between the cover plate 14 and the hub member 23.

The thrust member 39 is an annular member rotatably arranged at an outer circumference of the thrust member 40 (refer to Fig. 1). The thrust member 39 is arranged between the center plate 34 and the side plate 32 in the axial direction. The thrust member 39 is slidably in pressure contact with the center plate 34, and is slidably in pressure contact with the side plate 32.

The thrust member 40 is an annular member arranged between the center plate 34 and the hub member 23 (refer to Fig. 1). The thrust member 40 is arranged between the center plate 34 and the side plate 30 in the axial direction. The thrust member 40 is slidably in pressure contact with the center plate 34, and is slidably in pressure contact with the side plate 30. The thrust member 40 is interposed also between the center plate 34 and the side plate 32, and the hub member 23 in the radial direction, thereby serving as a slide bearing (a bush) for rotatably supporting the center plate 34 and the side plate 32 at the hub member 23.

The side plate 41 is an annular member arranged at the engine-side (the right side in Fig.1) relative to the center plate 45, and is the component member of the second dynamic damper 3d. The side plate 41 is arranged in a manner that a predetermined distance in the axial direction is provided relative to the side plate 43. The side plate 41 is, at an outer circumferential portion thereof, fixed to the side plate 43 to be integrally with the side plate 43 by means of the rivet 44. The side plate 41 is, at a radially inward portion thereof relative to the rivet 44, fixed by means of the rivet 42 to the intermediate plate 21. Thus, the side plate 41 and the intermediate plate 21 rotate integrally with each other. The side plate 41 includes, at a radially inward portion thereof relative to the rivet 44, a window portion 41a for accommodating the seat members 47 (i.e., the second seat members) and the coil spring 46 (i.e., the second coil spring), and circumferential end surfaces of the window portion 41a are configured to be in contact with and out of contact from the respective seat members 47. The side plate 41 is, at a radially inward portion thereof relative to the window portion 41a, in pressure contact with the thrust member 48 so as to be rotatable relative to the thrust member 48.

The rivet 42 is a member for fixing the side plate 41 to the intermediate plate 21 (refer to Fig. 1).

The side plate 43 is an annular member arranged at the transmission-side (the left side in Fig.1) relative to the center plate 45, and is the component member of the second dynamic damper 3d. The side plate 43 is arranged in a manner that the predetermined distance in the axial direction is provided relative to the side plate 41. The side plate 43 is, at an outer circumferential portion thereof, fixed to the side plate 41 to be integrally with the side plate 41 by means of the rivet 44. Thus, the side plate 43 and the side plate 41 rotate integrally with each other. The side plate 43 includes, at a radially inward portion thereof relative to the rivet 44, a window portion 43a for accommodating the seat members 47 and the coil spring 46, and circumferential end surfaces of the window portion 43a are configured to be in contact with and out of contact from the respective seat members 47. The side plate 43 is, at a radially inward portion thereof relative to the window portion 43a, rotatably held between the thrust member 49 and the thrust member 50 in a sandwiched manner therebetween.

The rivet 44 is a member for connecting the side plate 41 and the side plate 43 so that the side plate 41 and the side plate 43 are integral with each other (refer to Fig. 1). The side plate 41 is fixed at one end of the rivet 44 by staking and the side plate 43 is fixed at the other end of the rivet 44 by staking. An intermediate portion of the rivet 44 is inserted through a through hole 45b of the center plate 45. The rivet 44 restricts the torsion of the second dynamic damper 3d at a predetermined angle. The rivet 44 restricts the torsion of the second dynamic damper 3d by being in contact with a circumferential end surface of the through hole 45b in a case where the torsion is generated at the second dynamic damper 3d.

The center plate 45 is an annular member arranged between the side plate 41 and the side plate 43, and is the component member of the second dynamic damper 3d (refer to Fig. 1). The center plate 45 includes, at an outer circumferential portion thereof, the inertia body portion 45c which is arranged to be extended to a radially outer side relative to the side plates 41, 43. The inertia body portion 45c is a portion which serves as an inertia of the second dynamic damper 3d. The center plate 45 includes, at a radially inward portion thereof relative to the inertia body portion 45c, the through hole 45b. The rivet 44 is inserted through the through hole 45b. The through hole 45b restricts the torsion of the second dynamic damper 3d at the predetermined angle. The through hole 45b restricts the torsion of the second dynamic damper 3d in a manner that the circumferential end surface of the through hole 45b is in contact with the rivet 44 in a case where the torsion is generated at the second dynamic damper 3d. The center plate 45 includes a window portion 45a for accommodating the coil spring 46 and the seat members 47. At respective circumferential end surfaces of the window portion 45a, the window portion 45a is configured to be in contact with and out of contact from the seat members 47. In a case where a torsion is not generated between the center plate 45 and the side plates 41, 43, the window portion 45a is in contact with the seat members 47 arranged at respective ends of the coil spring 46 or the window portion 45a is positioned close to the seat members 47 while leaving a slight play between the window portion 45a and the seat members 47. In a case where the torsion is generated between the center plate 45 and the side plates 41, 43, the window portion 45a is in contact with one of the seat members 47. The center plate 45 is slidably held between the thrust member 48 and the thrust member 49 in a sandwiched manner in the axial direction. The center plate 45 is, at an inner circumferential end portion thereof, rotatably supported via the thrust member 48 at the hub member 23.

The coil spring 46 is the component member of the second dynamic damper 3d (refer to Figs. 1 and 2). The coil spring 46 is accommodated in the window portions 41a, 43a, 45a which are formed at the side plates 41, 43 and the center plate 45, respectively, and the coil spring 46 is in contact with the seat members 47 arranged at the respective sides of the coil spring 46. The coil spring 46 is for setting the resonance frequency of the second dynamic damper 3d by means of a combination of the coil spring 46 and an inertia of the center plate 45.

The seat members 47 are the component members of the second dynamic damper 3d (refer to Figs. 1 and 2). The seat members 47 are accommodated in the window portions 41a, 43a, 45a which are formed at the side plates 41, 43 and the center plate 45, respectively, in a manner that each of the seat members 47 is disposed between the circumferential end surfaces of the respective window portions 41a, 43a, 45a and a corresponding end portion of the coil spring 46. The seat members 47 may be made of resin in order to reduce the wear of the coil spring 46, the side plates 41, 43 and the center plate 45.

The thrust member 48 is an annular member rotatably arranged between the center plate 45 and the hub member 23 (refer to Fig. 1). The thrust member 48 is arranged between the center plate 45 and the side plate 41 in the axial direction. The thrust member 48 is slidably in pressure contact with the center plate 45, and is slidably in pressure contact with the side plate 41. The thrust member 48 is interposed also between the center plate 45 and the side plate 41, and the hub member 23 in the radial direction, and serves as a slide bearing (a bush) for rotatably supporting the center plate 45 and the side plate 41 at the hub member 23.

The thrust member 49 is an annular member rotatably arranged at an outer circumference of the thrust member 48 (refer to Fig. 1). The thrust member 49 is arranged between the center plate 45 and the side plate 43 in the axial direction. The thrust member 49 is slidably in pressure contact with the center plate 45, and is slidably in pressure contact with the side plate 43.

The thrust member 50 is an annular member rotatably arranged at the outer circumference of the hub member 23 (refer to Fig. 1). The thrust member 50 is arranged between the disc spring 51 and the side plate 43 in the axial direction. The thrust member 50 is biased or pushed by the disc spring 51 toward the side plate 43, and is slidably in pressure contact with the side plate 43. The thrust member 50, in combination with the disc spring 51, serves as the seal member sealing a clearance between the cover plate 16 and the hub member 23.

The disc spring 51 is a disc-shaped spring which is arranged between the thrust member 50 and the cover plate 16, and biases or pushes the thrust member 50 toward the side plate 43 (refer to Fig. 1). An inner circumferential end portion of the disc spring 51 is in contact with the thrust member 50 across the entire circumference thereof, and an outer circumferential end portion of the disc spring 51 is in contact with the cover plate 16 across the entire circumference thereof. The disc spring 51 covers or seals a clearance between the thrust member 50 and the cover plate 16 so that the viscous medium 54 is enclosed in the chamber 53. The disc spring 51, in combination with the thrust member 50, serves as the seal member sealing the clearance between the cover plate 16 and the hub member 23.

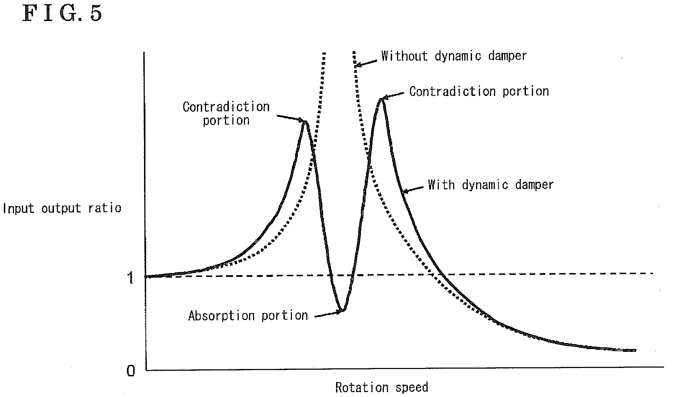

Next, an operation of the torque fluctuation reducing apparatus according to the exemplary first embodiment will be explained with reference to the drawings (refer to Fig. 5).

In a case where a dynamic damper is provided at a general torque fluctuation reducing apparatus including a main damper provided on a power transmission path between an engine and a transmission, a damping performance improves at an aimed resonance point, that is, the resonance point at which the damping performance is intended to be improved (refer to "an absorption portion" in Fig. 5). However, "a contradiction portion", at which the damping performance is impaired, exists at rotation speeds that precede and follow the absorption portion.

At a torque fluctuation reducing apparatus including two main dampers provided in series with each other on a power transmission path between an engine and a transmission, in a case where a dynamic damper is provided at a first-order plate (which corresponds to the cover plate 14, the plate 15 and the cover plate 16 in Fig. 1) arranged before, in terms of the order in which the power is transmitted, the main damper at an engine-side, the dynamic damper needs to be large in size because the vibrations inputted to the dynamic damper are large.

In addition, in a case where the dynamic damper is provided at a third-order plate (which corresponds to the hub member 23 in Fig. 1) arranged after, in terms of the order in which the power is transmitted, the main damper provided at a transmission-side, small effects are obtained because the vibrations have been reduced at the third-order plate by the main dampers 3a, 3b that are arranged in series with each other.

On the other hand, in a case where the dynamic damper is provided at a second-order plate (which corresponds to the intermediate plate 18, the intermediate plate 21 in Fig. 1) arranged between the two main dampers as explained in the first embodiment disclosed here, the damping performance improves compared to the cases where the dynamic damper is provided at the first-order plate and/or third-order plate.

According to the first embodiment, damping effects are increased by providing the dynamic dampers 3c, 3d at the intermediate plates 18, 21 arranged between the main dampers 3a, 3b. In addition, according to the first embodiment, the wear of each of the dampers is restricted by enclosing the viscous medium 54 in the chamber 53. Further, according to the first embodiment, an amount that the inertia body (the inertia body portion 34d, the inertia body 35) of the first dynamic damper 3c and the viscous medium 54 are in contact with each other, that is, a surface area of the inertia body of the dynamic damper 3c, which is in contact with the viscous medium 54, is controlled by enclosing the viscous medium 54 in the part of the chamber 53, and consequently an optimum damping is obtained.

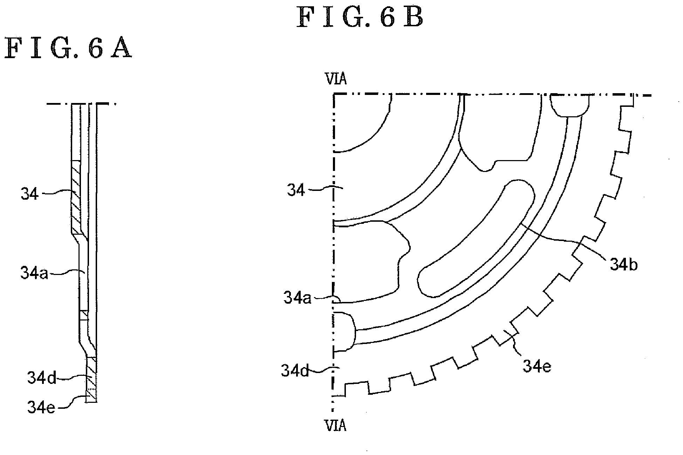

A torque fluctuation reducing apparatus according to a second embodiment according to the claimed invention will be explained with reference to the drawings (refer to Figs. 6A and 6B).

The second embodiment is a variation of the exemplary first embodiment. According to the second embodiment, the inertia body (corresponding to the inertia body 35 in Fig. 1) is not provided at the center plate 34 of the first dynamic damper (corresponding to the first dynamic damper 3c in Fig. 1) and a radially-recessed-and-protruding portion 34e (i.e., a recessed-and-protruding portion) is provided at an outer circumferential end surface of the inertia body portion 34d of the center plate 34. The radially-recessed-and-protruding portion 34e is formed in a teeth configuration (a gear configuration) which includes recess and protrusion in the radial direction. The radially-recessed-and-protruding portion 34e is set to be immersed in or be in contact with the viscous medium (corresponding to the viscous medium 54 in Fig. 1) in the chamber (corresponding to the chamber 53 in Fig. 1) so that a resistance occurring when the inertia body portion 34d moves in the viscous medium (corresponding to the viscous medium 54 in Fig. 1) is increased. Other structures and configurations of the second embodiment are identical to those of the exemplary first embodiment.

According to the second embodiment, advantages likewise the exemplary first embodiment are attained. In addition, a vibration damping performance is improved by adjusting or optimizing the resistance of the inertia body portion 34d by providing the radially-recessed-and-protruding portion 34e, and thus noises for suppressing the movement of the inertia of the first dynamic damper (corresponding to the first dynamic damper 3c in Fig. 1) are restricted from occurring.

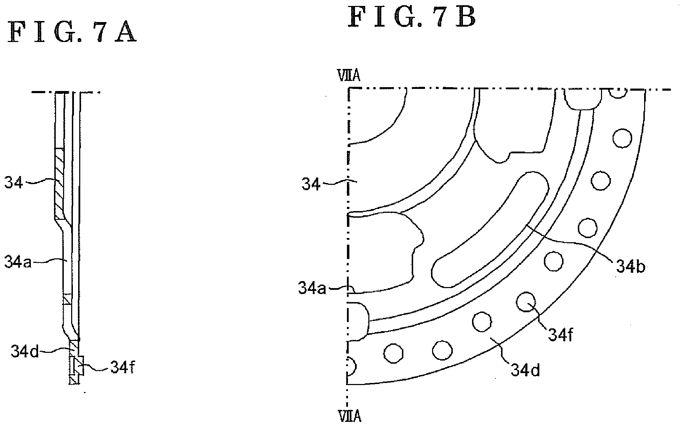

A torque fluctuation reducing apparatus according to a third embodiment according to the claimed invention will be explained with reference to the drawings (refer to Figs. 7A and 7B).

The third embodiment is a variation of the exemplary first embodiment. According to the third embodiment, the inertia body (corresponding to the inertia body 35 in Fig. 1) is not provided at the center plate 34 of the first dynamic damper (corresponding to the first dynamic damper 3c in Fig. 1) and an axially-recessed-and-protruding portion 34f (i.e., the recessed-and-protruding portion) which includes recess and protrusion in the axial direction is provided at the inertia body portion 34d of the center plate 34. In this embodiment, plural axially-recessed-and-protruding portions 34f are provided. The axially-recessed-and-protruding portion 34f is configured by pressing and/or punching so that the protrusion is formed at a surface of one side of the inertia body portion 34d and the recess is formed at a surface of the opposite side of the inertia body portion 34d. The axially-recessed-and-protruding portion 34f is set to be immersed in or be in contact with the viscous medium (corresponding to the viscous medium 54 in Fig. 1) in the chamber (corresponding to the chamber 53 in Fig. 1) so that the resistance occurring when the inertia body portion 34d moves in the viscous medium (corresponding to the viscous medium 54 in Fig. 1) is increased. Other structures and configurations of the third embodiment are identical to those of the exemplary first embodiment.

According to the third embodiment, the advantages likewise the exemplary first embodiment are attained. In addition, the vibration damping performance is improved by adjusting or optimizing the resistance of the inertia body portion 34d by providing the axially-recessed-and-protruding portion 34f, and thus the noises for suppressing the movement of the inertia of the first dynamic damper (corresponding to the first dynamic damper 3c in Fig. 1) are restricted from occurring.

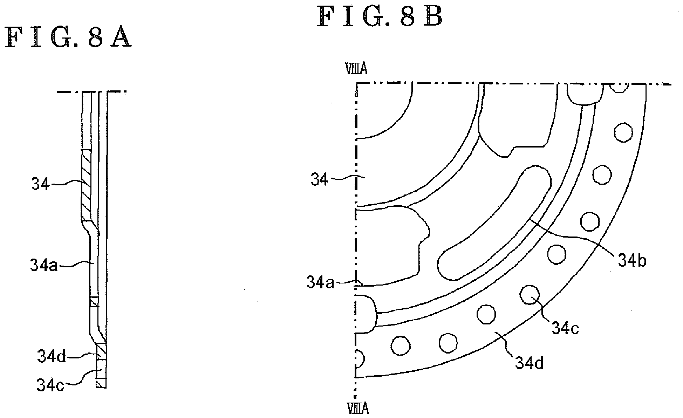

A torque fluctuation reducing apparatus according to an exemplary fourth embodiment will be explained with reference to the drawings (refer to Figs. 8A and 8B).

The fourth embodiment is a variation of the first embodiment. According to the fourth embodiment, the inertia body (corresponding to the inertia body 35 in Fig. 1) is not provided at the center plate 34 of the first dynamic damper (corresponding to the first dynamic damper 3c in Fig. 1) and the through hole 34c formed to pass through the inertia body portion 34d in the axial direction is provided at the inertia body portion 34d of the center plate 34. In this embodiment, plural through holes 34c are provided. The through hole 34c is set to be immersed in or be in contact with the viscous medium (corresponding to the viscous medium 54 in Fig. 1) in the chamber (corresponding to the chamber 53 in Fig. 1) so that the resistance occurring when the inertia body portion 34d moves in the viscous medium (corresponding to the viscous medium 54 in Fig. 1) is increased. Other structures and configurations of the fourth embodiment are identical to those of the first embodiment.

According to the fourth embodiment, the advantages likewise the first embodiment are attained. In addition, the vibration damping performance is improved by adjusting or optimizing the resistance of the inertia body portion 34d by providing the through hole 34c, and thus the noises for suppressing the movement of the inertia of the first dynamic damper (corresponding to the first dynamic damper 3c in Fig. 1) are restricted from occurring.

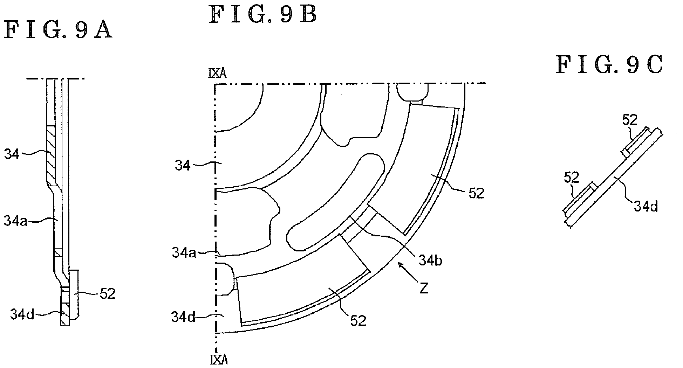

A torque fluctuation reducing apparatus according to an exemplary fifth embodiment will be explained with reference to the drawings (refer to Fig. 9A, 9B and 9C).

The fifth embodiment is a variation of the first embodiment. According to the fifth embodiment, instead of providing the inertia body (corresponding to the inertia body 35 in Fig. 1) at the center plate 34 of the first dynamic damper (corresponding to the first dynamic damper 3c in Fig. 1), an inertia body block 52 (i.e., a block) is provided at the center plate 34. In this embodiment, plural inertia body blocks 52 are provided. The inertia body block 52 is fixed by welding or with a rivet to the inertia body portion 34d of the center plate 34. The inertia body block 52 is set to be immersed in or be in contact with the viscous medium (corresponding to the viscous medium 54 in Fig. 1) in the chamber (corresponding to the chamber 53 in Fig. 1) so that the resistance occurring when the inertia body portion 34d moves in the viscous medium (corresponding to the viscous medium 54 in Fig. 1) is increased. The inertia body block 52 may be provided with, for example, a fin (a protrusion, a bent portion or the like) which serves as a resistance against the viscous medium (corresponding to the viscous medium 54 in Fig. 1). Other structures and configurations of the fifth embodiment are identical to those of the first embodiment.

According to the fifth embodiment, the advantages likewise the first embodiment are attained. In addition, the vibration damping performance is improved by adjusting or optimizing the resistance of the inertia body portion 34d by providing the inertia body block 52, and thus the noises for suppressing the movement of the inertia of the first dynamic damper (corresponding to the first dynamic damper 3c in Fig. 1) are restricted from occurring.

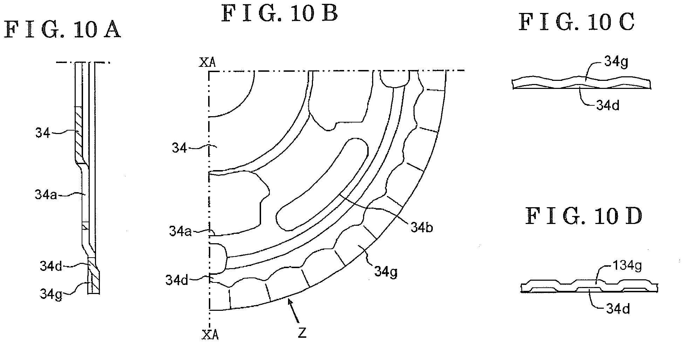

A torque fluctuation reducing apparatus according to an exemplary sixth embodiment will be explained with reference to the drawings (refer to Figs. 10A, 10B, 10C and 10D).

The sixth embodiment is a variation of the first embodiment. According to the sixth embodiment, the inertia body (corresponding to the inertia body 35 in Fig. 1) is not provided at the center plate 34 of the first dynamic damper (corresponding to the first dynamic damper 3c in Fig. 1) and a corrugated portion 34g (134g) which is formed in the corrugated shape in the axial direction at the inertia body portion 34d of the center plate 34. The corrugated portion 34g (134g) is set to be immersed in or be in contact with the viscous medium (corresponding to the viscous medium 54 in Fig. 1) in the chamber (corresponding to the chamber 53 in Fig. 1) so that the resistance occurring when the inertia body portion 34d moves in the viscous medium (corresponding to the viscous medium 54 in Fig. 1) is increased. Other structures and configurations of the sixth embodiment are identical to those of the first embodiment.

According to the sixth embodiment, the advantages likewise the first embodiment are attained. In addition, the vibration damping performance is improved by adjusting or optimizing the resistance of the inertia body portion 34d by providing the corrugated portion 34g (134g), and thus the noises for suppressing the movement of the inertia of the first dynamic damper (corresponding to the first dynamic damper 3c in Fig. 1) are restricted from occurring.

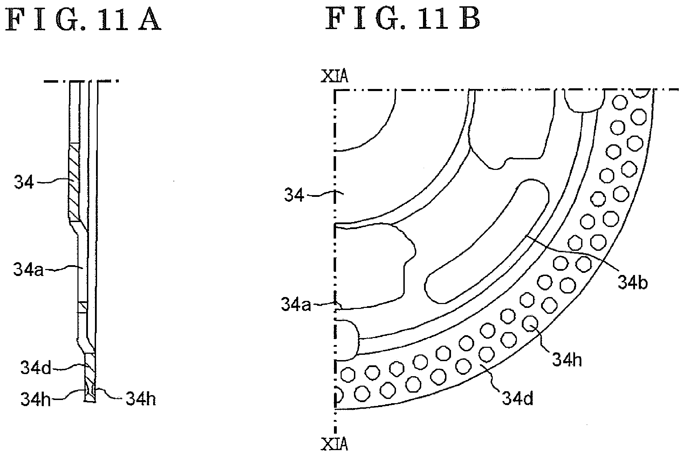

A torque fluctuation reducing apparatus according to an exemplary seventh embodiment will be explained with reference to the drawings (refer to Figs. 11A and 11B).

The seventh embodiment is a variation of the first embodiment. According to the seventh embodiment, the inertia body (corresponding to the inertia body 35 in Fig. 1) is not provided at the center plate 34 of the first dynamic damper (corresponding to the first dynamic damper 3c in Fig. 1) and a recessed portion 34h recessed in the axial direction is provided at the inertia body portion 34d of the center plate 34. In this embodiment, plural recessed portions 34h are provided. In the first to sixth embodiments, the resistance of the inertia body portion 34d is increased against the viscous medium (corresponding to the viscous medium 54 in Fig. 1). In contrast, the recessed portion 34h according to the seventh embodiment is for reducing the resistance against the viscous medium (corresponding to the viscous medium 54 in Fig. 1), and thus for allowing the inertia body portion 34d to move easily. The recessed portions 34h are formed on both surfaces of the inertia body portion 34d and are set to be immersed in or be in contact with the viscous medium (corresponding to the viscous medium 54 in Fig. 1) in the chamber (corresponding to the chamber 53 in Fig. 1). Other structures and configurations of the seventh embodiment are identical to those of the first embodiment. The recessed portions 34h of the seventh embodiment may be used in combination with any one or more of the first to sixth embodiments.

According to the seventh embodiment, the advantages likewise the first embodiment are attained. In addition, an influence of the viscous medium (corresponding to the viscous medium 54 in Fig. 1) is reduced by the recessed portions 34h, and an original or intended damping performance is ensured.

In the aforementioned embodiments, the engine is used as the drive source, however, the drive source may be a motor.

## Claims

1. A torque fluctuation reducing apparatus (3), comprising:
a first main damper (3a) provided on a power transmission path between a drive source (1) and a transmission (7), and reducing, by using an elastic force, fluctuation torque generated between the drive source (1) and the transmission (7);
a second main damper (3b) provided at a transmission-side relative to the first main damper (3a) to be in series with the first main damper (3a) on the power transmission path, and reducing, by using an elastic force, the fluctuation torque generated between the drive source (1) and the transmission (7), the second main damper (3b) including a vibration damping property which is different from a vibration damping property of the first main damper (3a);
a dynamic damper (3c, 3d) provided on the power transmission path between the first main damper (3a) and the second main damper (3b), and restricting vibration at a specific resonance point of a drive system on the power transmission path by using an inertia body (34d, 35, 45c) and an elastic force;
a chamber (53) accommodating the first main damper (3a) and the second main damper (3b), and the dynamic damper (3c, 3d); and
a viscous medium (54) enclosed in part of the chamber (53), **characterized in that** an inertia body portion (34d) of a center plate (34) is provided with:
a radially-recessed-and-protruding portion (34e) at an outer circumferential end surface of the inertia body portion (34d), wherein the radially-recessed-and-protruding portion (34e) is formed in a gear configuration which includes recess and protrusion in the radial direction; or
an axially-recessed-and-protruding portion (34f) which includes recess and protrusion in the axial direction, wherein the axially-recessed-and-protruding portion (34f) is configured by punching so that the protrusion is formed at a surface of one side of the inertia body portion (34d) and the recess is formed at a surface of the opposite side of the inertia body portion (34d); wherein
the recessed-and-protruding portion (34e, 34f) is set to be immersed in or be in contact with the viscous medium (54) in the chamber (53) so that resistance occurring when the inertia body portion (34d) moves in the viscous medium (54) is increased.

2. The torque fluctuation reducing apparatus (3) according to claim 1, wherein the first main damper (3a) is arranged radially outwardly relative to the second main damper (3b).

3. The torque fluctuation reducing apparatus (3) according to claim 1 or 2, wherein
the viscous medium (54) corresponds to oil or grease of which viscosity resistance increases as the oil or the grease cools, and/or
the first main damper (3a) is set to be immersed in the viscous medium (54) accumulating at a radially outward portion in the chamber (53) when the torque fluctuation reducing apparatus (3) rotates.

4. The torque fluctuation reducing apparatus (3) according to any one of claims 1 through 3, wherein the first main damper (3a) includes an arc coil spring (19) which is formed in a circular arc-shape and which reduces the fluctuation torque generated between the drive source (1) and the transmission (7).

5. The torque fluctuation reducing apparatus (3) according to any one of claims 1 through 4, further comprising:
a cover plate (14, 16) covering the chamber (53), the cover plate (14, 16) serving as part of a first power transmission member (14, 16) on the power transmission path at a drive source-side relative to the first main damper (3a), and serving as part of a component member of the first main damper (3a).

6. The torque fluctuation reducing apparatus (3) according to claim 5, further comprising:
a seal member (38, 50, 51) sealing a clearance between a second power transmission member (23) on the power transmission path at the transmission-side relative to the second main damper (3b) and the cover plate (14, 16), wherein
the cover plate (14, 16) is formed in an annular shape and is extended radially inwardly relative to the first main damper (3a) and the second main damper (3b), and the dynamic damper (3c, 3d).

7. The torque fluctuation reducing apparatus (3) according to any one of claims 1 through 6, wherein
the second main damper (3b) includes a first coil spring (24, 25) for reducing the fluctuation torque generated between the drive source (1) and the transmission (7), and a first seat member (26) made of resin and arranged at each end of the first coil spring (24, 25), and
the dynamic damper (3c, 3d) includes a second coil spring (36, 46) for restricting vibration at a specific resonance point of a rotative power from the drive source (1), and a second seat member (37, 47) made of resin and arranged at each end of the second coil spring (36, 46).

8. The torque fluctuation reducing apparatus (3) according to any one of claims 1 through 7, wherein the dynamic damper (3c, 3d) is provided at plural positions on the power transmission path between the first main damper (3a) and the second main damper (3b) in a manner that the plural dynamic dampers (3c, 3d) are parallel to each other on the power transmission path.

9. The torque fluctuation reducing apparatus (3) according to claim 8, wherein each of the plural dynamic dampers (3c, 3d) includes a different resonance frequency from each other.

10. The torque fluctuation reducing apparatus (3) according to claim 8 or 9, wherein one or both of the elastic force and the inertia body (34d, 35, 45c) of each of the plural dynamic dampers (3c, 3d) is different from each other.

11. The torque fluctuation reducing apparatus (3) according to any one of claims 8 through 10, wherein one or more of the plural dynamic dampers (3c, 3d) is arranged at one side and the rest of the dynamic dampers (3c, 3d) is arranged at the other side in an axial direction of the torque fluctuation reducing apparatus (3) relative to the first main damper (3a) and the second main damper (3b).

12. The torque fluctuation reducing apparatus (3) according to any one of claims 8 through 11, wherein part of the inertia body (34d, 35, 45c) of at least one of the plural dynamic dampers (3c, 3d) is set to be immersed in the viscous medium (54) accumulating at a radially outward portion in the chamber (53) when the torque fluctuation reducing apparatus (3) rotates.

13. The torque fluctuation reducing apparatus (3) according to claim 12, wherein the inertia body (34d, 35), the part of which is immersed in the viscous medium (54) when the torque fluctuation reducing apparatus (3) rotates, includes a through hole (34c, 35a) or a corrugated portion (34g, 134g) which increases resistance when the inertia body (34d, 35) moves in the viscous medium (54).

14. The torque fluctuation reducing apparatus (3) according to claim 12, wherein the inertia body (34d), the part of which is immersed in the viscous medium (54) when the torque fluctuation reducing apparatus (3) rotates, is provided with a block (52) which increases resistance when the inertia body (34d) moves in the viscous medium (54).

15. The torque fluctuation reducing apparatus (3) according to any one of claims 12 through 14, wherein the inertia body (34d), the part of which is immersed in the viscous medium (54) when the torque fluctuation reducing apparatus (3) rotates, includes a recessed portion (34h) which reduces resistance when the inertia body (34d) moves in the viscous medium (54).

## Patentansprüche

1. Drehmomentschwankungsreduzierende Vorrichtung (3), mit:
einem ersten Hauptdämpfer (3a), der auf einem Leistungsübertragungsweg zwischen einer Antriebsquelle (1) und einem Getriebe (7) vorgesehen ist und unter Verwendung einer Elastizitätskraft ein Schwankungsdrehmoment, das zwischen der Antriebsquelle (1) und dem Getriebe (7) erzeugt wird, reduziert;
einem zweiten Hauptdämpfer (3b), der an einer Getriebeseite relativ zu dem ersten Hauptdämpfer (3a) vorgesehen ist, so dass er auf dem Leistungsübertragungsweg in Reihe mit dem ersten Hauptdämpfer (3a) ist, und unter Verwendung einer Elastizitätskraft das Schwankungsdrehmoment, das zwischen der Antriebsquelle (1) und dem Getriebe (7) erzeugt wird, reduziert,
welcher zweite Hauptdämpfer (3b) eine Schwingungsdämpfungseigenschaft aufweist, die von einer Schwingungsdämpfungseigenschaft des ersten Hauptdämpfers (3a) verschieden ist;
einem dynamischen Dämpfer (3c, 3d), der auf dem Leistungsübertragungsweg zwischen dem ersten Hauptdämpfer (3a) und dem zweiten Hauptdämpfer (3b) vorgesehen ist und eine Schwingung an einem bestimmten Resonanzpunkt eines Antriebssystems auf dem Leistungsübertragungsweg unter Verwendung eines Trägheitskörpers (34d, 35, 45c) und einer Elastizitätskraft begrenzt;
einer Kammer (53), die den ersten Hauptdämpfer (3a) und den zweiten Hauptdämpfer (3b) und den dynamischen Dämpfer (3c, 3d) aufnimmt; und
einem viskosen Medium (54), das in einem Teil der Kammer (53) eingeschlossen ist, **dadurch gekennzeichnet, dass**
ein Trägheitskörperabschnitt (34d) einer Mittelplatte (34) mit:
einem radial vertieften und vorstehenden Abschnitt (34e) an einer Außenumfangsendoberfläche des Trägheitskörperabschnitts (34d), bei dem der radial vertiefte und vorstehende Abschnitt (34e) in einer Zahnradausgestaltung, die eine Vertiefung und einen Vorsprung in der radialen Richtung aufweist, ausgebildet ist; oder
einem axial vertieften und vorstehenden Abschnitt (34f), der eine Vertiefung und einen Vorsprung in der axialen Richtung aufweist, bei dem der axial vertiefte und vorstehende Abschnitt (34f) durch Stanzen ausgebildet ist, so dass der Vorsprung an einer Oberfläche einer Seite des Trägheitskörperabschnitts (34d) ausgebildet ist und die Vertiefung an einer Oberfläche der entgegengesetzten Seite des Trägheitskörperabschnitts (34d) ausgebildet ist,
versehen ist; bei der
der vertiefte und vorstehende Abschnitt (34e, 34f) so festgelegt ist, dass er in das viskose Medium (54) in der Kammer (53) eingetaucht oder damit in Kontakt ist, so dass ein Widerstand, der auftritt, wenn sich der Trägheitskörperabschnitt (34d) in dem viskosen Medium (54) bewegt, erhöht ist.

2. Drehmomentschwankungsreduzierende Vorrichtung (3) nach Anspruch 1, bei der der erste Hauptdämpfer (3a) radial auswärts relativ zu dem zweiten Hauptdämpfer (3b) angeordnet ist.

3. Drehmomentschwankungsreduzierende Vorrichtung (3) nach Anspruch 1 oder 2, bei der das viskose Medium (54) Öl oder Fett entspricht, dessen Viskositätswiderstand zunimmt, wenn sich das Öl oder das Fett abkühlt, und/oder
der erste Hauptdämpfer (3a) so festgelegt ist, dass er in das viskose Medium (54) eingetaucht ist, das sich an einem radial nach außen gerichteten Abschnitt in der Kammer (53) ansammelt, wenn sich die drehmomentschwankungsreduzierende Vorrichtung (3) dreht.

4. Drehmomentschwankungsreduzierende Vorrichtung (3) nach einem der Ansprüche 1 bis 3, bei der der erste Hauptdämpfer (3a) eine Bogenschraubenfeder (19) aufweist, die in einer Kreisbogenform ausgebildet ist und die das Schwankungsdrehmoment, das zwischen der Antriebsquelle (1) und dem Getriebe (7) erzeugt wird, reduziert.

5. Drehmomentschwankungsreduzierende Vorrichtung (3) nach einem der Ansprüche 1 bis 4, ferner mit:
einer Deckplatte (14, 16), die die Kammer (53) bedeckt, welche Deckplatte (14, 16) als ein Teil eines ersten Leistungsübertragungsbauteils (14, 16) auf dem Leistungsübertragungsweg an einer Antriebsquellenseite relativ zu dem ersten Hauptdämpfer (3a) dient und als ein Teil eines Bestandbauteils des ersten Hauptdämpfers (3a) dient.

6. Drehmomentschwankungsreduzierende Vorrichtung (3) nach Anspruch 5, ferner mit:
einem Dichtungsbauteil (38, 50, 51), das einen Abstand zwischen einem zweiten Leistungsübertragungsbauteil (23) auf dem Leistungsübertragungsweg an der Getriebeseite relativ zu dem zweiten Hauptdämpfer (3b) und der Deckplatte (14, 16) abdichtet, bei der die Deckplatte (14, 16) in einer ringförmigen Form ausgebildet ist und radial einwärts relativ zu dem ersten Hauptdämpfer (3a) und dem zweiten Hauptdämpfer (3b) und dem dynamischen Dämpfer (3c, 3d) ausgedehnt ist.

7. Drehmomentschwankungsreduzierende Vorrichtung (3) nach einem der Ansprüche 1 bis 6, bei der
der zweite Hauptdämpfer (3b) eine erste Schraubenfeder (24, 25) zum Reduzieren des Schwankungsdrehmoments, das zwischen der Antriebsquelle (1) und dem Getriebe (7) erzeugt wird, und ein erstes Sitzbauteil (26), das aus Harz ausgebildet ist und an jedem Ende der ersten Schraubenfeder (24, 25) angeordnet ist, aufweist, und
der dynamische Dämpfer (3c, 3d) eine zweite Schraubenfeder (36, 46) zum Begrenzen einer Schwingung an einem bestimmten Resonanzpunkt einer Drehleistung von der Antriebsquelle (1) und ein zweites Sitzbauteil (37, 47), das aus Harz ausgebildet ist und an jedem Ende der zweiten Schraubenfeder (36, 46) angeordnet ist, aufweist.

8. Drehmomentschwankungsreduzierende Vorrichtung (3) nach einem der Ansprüche 1 bis 7, bei der der dynamische Dämpfer (3c, 3d) an mehreren Positionen auf dem Leistungsübertragungsweg zwischen dem ersten Hauptdämpfer (3a) und dem zweiten Hauptdämpfer (3b) in einer Weise vorgesehen ist, dass die mehreren dynamischen Dämpfer (3c, 3d) auf dem Leistungsübertragungsweg parallel zueinander sind.

9. Drehmomentschwankungsreduzierende Vorrichtung (3) nach Anspruch 8, bei der jeder der mehreren dynamischen Dämpfer (3c, 3d) eine voneinander verschiedene Resonanzfrequenz aufweist.

10. Drehmomentschwankungsreduzierende Vorrichtung (3) nach Anspruch 8 oder 9, bei der eine bzw. einer oder beide von der Elastizitätskraft und dem Trägheitskörper (34d, 35, 45c) jedes der mehreren dynamischen Dämpfer (3c, 3d) voneinander verschieden ist.

11. Drehmomentschwankungsreduzierende Vorrichtung (3) nach einem der Ansprüche 8 bis 10, bei der in einer axialen Richtung der drehmomentschwankungsreduzierenden Vorrichtung (3) relativ zu dem ersten Hauptdämpfer (3a) und dem zweiten Hauptdämpfer (3b) einer oder mehr der mehreren dynamischen Dämpfer (3c, 3d) an einer Seite angeordnet ist und der Rest der dynamischen Dämpfer (3c, 3d) an der anderen Seite angeordnet ist.

12. Drehmomentschwankungsreduzierende Vorrichtung (3) nach einem der Ansprüche 8 bis 11, bei der ein Teil des Trägheitskörpers (34d, 35, 45c) mindestens eines der mehreren dynamischen Dämpfer (3c, 3d) so festgelegt ist, dass er in das viskose Medium (54) eingetaucht ist, das sich an einem radial nach außen gerichteten Abschnitt in der Kammer (53) ansammelt, wenn sich die drehmomentschwankungsreduzierende Vorrichtung (3) dreht.

13. Drehmomentschwankungsreduzierende Vorrichtung (3) nach Anspruch 12, bei der der Trägheitskörper (34d, 35), dessen Teil in das viskose Medium (54) eingetaucht ist, wenn sich die drehmomentschwankungsreduzierende Vorrichtung (3) dreht, ein Durchgangsloch (34c, 35a) oder einen geriffelten Abschnitt (34g, 134g) aufweist, der einen Widerstand erhöht, wenn sich der Trägheitskörper (34d, 35) in dem viskosen Medium (54) bewegt.

14. Drehmomentschwankungsreduzierende Vorrichtung (3) nach Anspruch 12, bei der der Trägheitskörper (34d), dessen Teil in das viskose Medium (54) eingetaucht ist, wenn sich die drehmomentschwankungsreduzierende Vorrichtung (3) dreht, mit einem Block (52) versehen ist, der einen Widerstand erhöht, wenn sich der Trägheitskörper (34d) in dem viskosen Medium (54) bewegt.

15. Drehmomentschwankungsreduzierende Vorrichtung (3) nach einem der Ansprüche 12 bis 14, bei der der Trägheitskörper (34d), dessen Teil in das viskose Medium (54) eingetaucht ist, wenn sich die drehmomentschwankungsreduzierende Vorrichtung (3) dreht, einen vertieften Abschnitt (34h) aufweist, der einen Widerstand reduziert, wenn sich der Trägheitskörper (34d) in dem viskosen Medium (54) bewegt.

## Revendications

1. Dispositif (3) de réduction de fluctuation de couple, comprenant :
un premier amortisseur principal (3a) prévu sur un trajet de transmission de puissance entre une source d'entraînement (1) et une transmission (7), et réduisant, en utilisant une force élastique, le couple de fluctuation généré entre la source d'entraînement (1) et la transmission (7) ;
un deuxième amortisseur principal (3b) prévu à un côté transmission par rapport au premier amortisseur principal (3a) en série avec le premier amortisseur principal (3a) sur le trajet de transmission de puissance, et réduisant, en utilisant une force élastique, le couple de fluctuation généré entre la source d'entraînement (1) et la transmission (7), le deuxième amortisseur principal (3b) comprenant une propriété d'amortissement des vibrations qui est différente d'une propriété d'amortissement des vibrations du premier amortisseur principal (3a) ;
un amortisseur dynamique (3c, 3d) prévu sur le trajet de transmission de puissance entre le premier amortisseur principal (3a) et le deuxième amortisseur principal (3b), et limitant les vibrations à un point de résonance spécifique d'un système d'entraînement sur le trajet de transmission de puissance en utilisant un corps d'inertie (34d, 35, 45c) et une force élastique ;
une chambre (53) recevant le premier amortisseur principal (3a) et le deuxième amortisseur principal (3b), et l'amortisseur dynamique (3c, 3d) ; et
un milieu visqueux (54) enfermé dans une partie de la chambre (53), **caractérisé en ce qu'**une partie de corps d'inertie (34d) d'une plaque centrale (34) est munie de :
une partie évidée et saillante radialement (34e) au niveau d'une surface d'extrémité circonférentielle extérieure de la partie de corps d'inertie (34d), où la partie évidée et saillante radialement (34e) est formée dans une configuration d'engrenage qui comprend un évidement et une saillie dans la direction radiale ; ou
une partie évidée et saillante axialement (34f) qui comprend un évidement et une saillie dans la direction axiale, où la partie évidée et saillante axialement (34f) est configurée par poinçonnage de sorte que la saillie est formée sur une surface d'un côté de la partie de corps d'inertie (34d) et l'évidement est formé sur une surface du côté opposé de la partie de corps d'inertie (34d) ; où la partie évidée et saillante (34e, 34f) est réglée pour être immergée dans le milieu visqueux (54) dans la chambre (53) ou pour être en contact avec celui-ci, de sorte que la résistance apparaissant lorsque la partie de corps d'inertie (34d) se déplace dans le milieu visqueux (54) est accrue.

2. Dispositif (3) de réduction de fluctuation de couple selon la revendication 1, où le premier amortisseur principal (3a) est disposé radialement vers l'extérieur par rapport au deuxième amortisseur principal (3b).

3. Dispositif (3) de réduction de fluctuation de couple selon la revendication 1 ou 2, dans lequel
le milieu visqueux (54) correspond à une huile ou une graisse dont la résistance à la viscosité augmente à mesure que l'huile ou la graisse refroidit, et/ou
le premier amortisseur principal (3a) est réglé pour être immergé dans le milieu visqueux (54) s'accumulant dans une partie radialement extérieure dans la chambre (53) lorsque le dispositif de réduction des fluctuations de couple (3) tourne.

4. Dispositif (3) de réduction de fluctuation de couple selon l'une quelconque des revendications 1 à 3, dans lequel le premier amortisseur principal (3a) comprend un ressort hélicoïdal à arc (19) qui est formé en forme d'arc circulaire et qui réduit le couple de fluctuation généré entre la source d'entraînement (1) et la transmission (7).

5. Dispositif (3) de réduction de fluctuation de couple selon l'une quelconque des revendications 1 à 4, comprenant en outre :
une plaque de recouvrement (14, 16) recouvrant la chambre (53), la plaque de recouvrement (14, 16) servant de partie d'un premier élément de transmission de puissance (14, 16) sur le trajet de transmission de puissance à un côté source d'entraînement par rapport au premier amortisseur principal (3a), et servant de partie d'un élément composant du premier amortisseur principal (3a).

6. Dispositif (3) de réduction de fluctuation de couple selon la revendication 5, comprenant en outre :
un élément d'étanchéité (38, 50, 51) scellant un jeu entre un deuxième élément de transmission de puissance (23) sur le trajet de transmission de puissance du côté transmission par rapport au deuxième amortisseur principal (3b) et à la plaque de recouvrement (14, 16), où
la plaque de recouvrement (14, 16) est formée en forme annulaire et est étendue radialement vers l'intérieur par rapport au premier amortisseur principal (3a) et au deuxième amortisseur principal (3b) et à l'amortisseur dynamique (3c, 3d).

7. Dispositif (3) de réduction de fluctuation de couple selon l'une quelconque des revendications 1 à 6, dans lequel
le deuxième amortisseur principal (3b) comprend un premier ressort hélicoïdal (24, 25) pour réduire le couple de fluctuation généré entre la source d'entraînement (1) et la transmission (7), et un premier élément de siège (26) fait en résine et agencé à chaque extrémité du premier ressort hélicoïdal (24, 25), et
l'amortisseur dynamique (3c, 3d) comprend un deuxième ressort hélicoïdal (36, 46) pour limiter les vibrations à un point de résonance spécifique d'une puissance rotative provenant de la source d'entraînement (1), et un deuxième élément de siège (37, 47) fait en résine et agencé à chaque extrémité du deuxième ressort hélicoïdal (36, 46).

8. Dispositif (3) de réduction de fluctuation de couple selon l'une quelconque des revendications 1 à 7, où l'amortisseur dynamique (3c, 3d) est prévu en plusieurs positions sur le trajet de transmission de puissance entre le premier amortisseur principal (3a) et le deuxième amortisseur principal (3b) de sorte que la pluralité d'amortisseurs dynamiques (3c, 3d) soient parallèles les uns aux autres sur le trajet de transmission de puissance.

9. Dispositif de réduction de fluctuation de couple (3) selon la revendication 8, où chacun parmi la pluralité d'amortisseurs dynamiques (3c, 3d) comporte une fréquence de résonance différente les uns des autres.

10. Dispositif (3) de réduction de fluctuation de couple selon la revendication 8 ou 9, où l'un ou les deux parmi la force élastique et le corps d'inertie (34d, 35, 45c) de chaque amortisseur de la pluralité d'amortisseurs dynamiques (3c, 3d) sont différents les uns des autres.

11. Dispositif (3) de réduction de fluctuation de couple selon l'une quelconque des revendications 8 à 10, où un ou plus amortisseurs parmi la pluralité d'amortisseurs dynamiques (3c, 3d) sont disposés d'un côté et le reste des amortisseurs dynamiques (3c, 3d) est disposé de l'autre côté dans une direction axiale du dispositif de réduction de fluctuation de couple (3) relativement au premier amortisseur principal (3a) et au deuxième amortisseur principal (3b).

12. Dispositif (3) de réduction de fluctuation de couple selon l'une quelconque des revendications 8 à 11, où une partie du corps d'inertie (34d, 35, 45c) d'au moins l'un parmi la pluralité d'amortisseurs dynamiques (3c, 3d) est réglé pour être immergée dans le milieu visqueux (54) s'accumulant dans une partie radialement extérieure dans la chambre (53) lorsque le dispositif de réduction de fluctuation de couple (3) tourne.

13. Dispositif (3) de réduction de fluctuation de couple selon la revendication 12, où le corps d'inertie (34d, 35), dont une partie est immergée dans le milieu visqueux (54) lorsque le dispositif de réduction des fluctuations de couple (3) tourne, comprend un trou traversant (34c, 35a) ou une partie ondulée (34g, 134g) qui augmente la résistance lorsque le corps d'inertie (34d, 35) se déplace dans le milieu visqueux (54).

14. Dispositif (3) de réduction de fluctuation de couple selon la revendication 12, où le corps d'inertie (34d), dont la partie est immergée dans le milieu visqueux (54) lorsque le dispositif de réduction des fluctuations de couple (3) tourne, est muni d'un bloc (52) qui augmente la résistance lorsque le corps d'inertie (34d) se déplace dans le milieu visqueux (54).

15. Dispositif (3) de réduction de fluctuation de couple selon l'une quelconque des revendications 12 à 14, où le corps d'inertie (34d), dont la partie est immergée dans le milieu visqueux (54) lorsque le dispositif de réduction des fluctuations de couple (3) tourne, comprend une partie évidée (34h) qui réduit la résistance lorsque le corps d'inertie (34d) se déplace dans le milieu visqueux (54).
